# EUROPÄISCHE PATENTANMELDUNG

(11) **EP 4 556 156 A2**
(43) Veröffentlichungstag der Anmeldung: **21.05.2025**
(21) Anmeldenummer: 24197396.5
(22) Anmeldetag: 29.08.2024
(51) Int. Cl.: B23P 11/02, B23Q 7/04, B23Q 11/00, B23Q 17/00

(54) **AUTOMATISIERTE SCHRUMPFZELLE**

(30) Priorität: 06.09.2023 DE 102023124026; 22.03.2024 DE 102024108330; 01.08.2024 DE 102024122028
(71) Anmelder: Franz Haimer Maschinenbau KG, 86568 Hollenbach-Igenhausen (DE)
(72) Erfinder: Haimer, Franz, 86568 Hollenbach-Igenhausen (DE); Haimer, Andreas, 86568 Hollenbach-Igenhausen (DE)
(74) Vertreter: Schwarz, Wolfgang

(57) **Zusammenfassung**

Die Erfindung betrifft eine Schrumpfvorrichtung zum automatisierten Ein- und Ausschrumpfen eines Werkzeugs in einen Werkzeughalter sowie ein Verfahren zum automatisierten Ein- und Ausschrumpfen eines Werkzeugs in einen Werkzeughalter. Die Erfindung betrifft weiter auch eine Förderbox für Werkzeughalter und/oder Werkzeuge.

Die Schrumpfvorrichtung zum automatisierten Ein- und Ausschrumpfen eines Werkzeugs, wie beispielsweise Rotationswerkzeug, wie Fräser, Bohrer u.Ä., in einen Werkzeughalter, wie insbesondere Schrumpfaufnahmen, sieht ein Schrumpfgerät zu einem Ein- und/oder Ausschrumpfen eines Werkzeuges in einen Werkzeughalter sowie eine erste mehrachsige Handhabungsvorrichtung zum Versetzen von Werkzeughalter und Werkzeugen in der Schrumpfvorrichtung vor.

Um im Umfeld eines automatisierten Gesamtprozesses einer automatisierten Produktion von Werkstücken das Bestücken eines Werkzeughalters mit Werkzeugen durch Schrumpfen mit hoher Genauigkeit gewährleisten zu können, sieht die Schrumpfvorrichtung eine zweite, automatisch verfahrbare Handhabungsvorrichtung. Diese sieht einen einachsigen linearen Antrieb vor, so dass - mittels dieses einachsigen linearen Antriebs - das Werkzeug beim Ein- bzw. Ausschrumpfen entlang dieser einen Achse (Z-Achse) relativ zu dem Werkzeughalter automatisch verfahrbar ist.

## Beschreibung

Die Erfindung betrifft eine Schrumpfvorrichtung zum automatisierten Ein- und Ausschrumpfen eines Werkzeugs in einen Werkzeughalter sowie ein Verfahren zum automatisierten Ein- und Ausschrumpfen eines Werkzeugs in einen Werkzeughalter. Die Erfindung betrifft weiter auch eine Förderbox für Werkzeughalter und/oder Werkzeuge.

Aus der DE 10 2016 208 505 A1 ist eine solche Schrumpfvorrichtung zum automatisierten Ein- und Ausschrumpfen eines Werkzeugs in einen Werkzeughalter bzw. ein solches Verfahren bekannt.

Es ist bekannt, Werkzeughalter, die einen Schaft eines Werkzeugs, insbesondere eines Rotationswerkzeugs, wie beispielsweise eines Bohrers, eines Fräsers oder eines Schleifwerkzeugs, in einem Presssitz in einer zentrischen Aufnahmeöffnung des Werkzeughalters halten, im Bereich dieser Aufnahmeöffnung durch Erwärmen aufzuweiten, um den Schaft des Werkzeugs einsetzen oder entnehmen zu können (thermisches Ein- bzw. Ausschrumpfen bzw. kurz nur Ein- bzw. Ausschrumpfen).

Üblicherweise werden dafür sogenannte Schrumpfgeräte - und für die Erwärmung des Werkzeughalters dortig verbaute Induktionsheizeinrichtungen genutzt, bei welchen mittels einer Induktionsspulenanordnung in dem Werkzeughalter transformatorisch Wirbelströme induziert werden.

In der nur wenige Sekunden dauernden Aufwärmphase wird der (sich im Schrumpfgerät befindliche) Werkzeughalter im Bereich der Aufnahmeöffnung auf mehrere 100°C erwärmt (, wobei dadurch der Bereich der Aufnahmeöffnung des Werkzeughalters aufgeweitet wird - und so der Schaft des Werkzeugs dort einsetzt bzw. das Werkzeug entnommen werden kann).

Um die Abkühlphase des Werkzeughalters zu verkürzen (und ggfl. auch die Betriebssicherheit bei Schrumpfen zu erhöhen), wird dieser nachfolgend durch Anblasen mit einem Luftstrom oder mittels einer von Kühlmittel durchflossenen Kühlmanschette abgekühlt.

Durch fortschreitende Automatisierung industrieller Prozesse wurde in den vergangenen Jahren auch der Schrumpfprozess weitestgehend automatisiert, wobei hier nicht nur der eigentliche Schrumpfvorgang durch das Schrumpfgerät, wie dargestellt, automatisiert wurde, sondern auch - dem eigentlichen Schrumpfvorgang - vor- und nachgelagerte Prozesse, wie die Zuführung und die Abfuhr von Werkzeughalter und Werkzeuge zum Schrumpfgerät oder auch die Kühlung (eines Werkzeughalters nach dem Schrumpfen), ein Wuchten und/oder ein Voreinstellen, - als integrativ notwendige Prozesse beim automatisierten Schrumpfen im Gesamtprozess einer industriellen automatisierten Fertigung.

D.h., mittels einer solchen automatisierten Schrumpfvorrichtung, welche oftmals bzw. üblicherweise auch nur automatisierte Schrumpfzelle genannt wird, bzw. der **Schrumpfvorrichtung zum automatisierten Ein- und Ausschrumpfen eines Werkzeugs in einen Werkzeughalter** kann eine Bestückung eines Werkzeughalters mit einem Werkzeug bzw. ein Werkzeugwechsel bei einem Werkzeughalter nahezu ohne manuellen Eingriff automatisiert - im Gesamtprozess einer automatisierten Produktion von Werkstücken - durchgeführt werden.

Nochmals zu Klarstellung - **Schrumpfvorrichtung (zum automatisierten Ein- und Ausschrumpfen eines Werkzeugs in einen Werkzeughalter)** bzw. **(automatisierte) Schrumpfzelle** meint eine komplexe industrielle Anlage, welche so - als zwar - einen durchaus wesentlichen Bestandteil das Schrumpfgerät - zum (eigentlichen) Ein-/Ausschrumpfen von Werkzeugen in Werkzeughalter - aufweist, darüber hinaus aber eine Mehrzahl verschiedener anderer wichtiger Bestandteile, wie Handhabungsgräte bzw. Industrieroboter/-arme und/oder Fördereinrichtungen/-bänder, welche dem (eigentlichen) Schrumpfen im Schrumpfgerät vor- und nachgelagerte Prozesse bewerkstelligen - und so einen komplexen automatisierten (Gesamt-)Prozess - als integrativ notwendigen Prozess beim automatisierten Schrumpfen im Gesamtprozess einer industriellen automatisierten Fertigung ermöglichen.

D.h., eine **Schrumpfvorrichtung (zum automatisierten Ein- und Ausschrumpfen eines Werkzeugs in einen Werkzeughalter)** bzw. **(automatisierte) Schrumpfzelle** auf ein bzw. das Schrumpfgerät zu reduzieren, greift zu kurz.

Eine solche **Schrumpfvorrichtung zum automatisierten Ein- und Ausschrumpfen eines Werkzeugs in einen Werkzeughalter** bzw. **automatisierte Schrumpfzelle** ist aus der bereits erwähnten DE 10 2016 208 505 A1 bekannt.

Diese Schrumpfvorrichtung zum automatisierten Ein- und Ausschrumpfen eines Werkzeugs in einen Werkzeughalter sieht ein Schrumpfgerät zu einem Ein- und/oder Ausschrumpfen eines Werkzeuges in einen Werkzeughalter und - in diesem Fall - mehrere mehrachsigen Handhabungsvorrichtung (Greifer-/Roboterarme) zum Versetzen von Werkzeughalter und Werkzeugen in der Schrumpfvorrichtung vor.

Soweit diese Schrumpfvorrichtung aus der DE 10 2016 208 505 A1 eine Automatisierung des eigentlichen Schrumpfvorgangs im Schrumpfgerät der Vorrichtung vorsieht, ist dort vorgesehen, dass das Werkzeug von Hand (oder mittels einer nicht näher beschriebenen Handhabungsvorrichtung - beschrieben ist soweit nur der mehrachsige Roboterarm) in die thermisch aufgeweitete Aufnahmeöffnung des Werkzeughalters automatisiert eingesetzt oder aus diesem entnommen werden kann.

Nachteilig bei solchen automatisierten Schrumpfvorrichtungen bzw. -zellen mag sein, dass durch Einsetzen des Werkzeugs in den Werkzeughalter beim Schrumpfen - manuell oder mittels erwähnter Handhabungsgeräte bzw. mehrachsiger Roboterarme eine Genauigkeit beim Schrumpfen leidet.

Es ist Aufgabe der Erfindung, die im Stand der Technik bekannten automatisierten Schrumpfvorrichtungen bzw. -zellen dahingehend zu verbessern, dass sie ein automatisiertes Ein-und Ausschrumpfen mit hoher Genauigkeit bei hoher Betriebssicherheit und hoher Effizienz und Effektivität ermöglichen.

Diese Aufgabe wird gelöst durch eine Schrumpfvorrichtung zum automatisierten Ein- und Ausschrumpfen eines Werkzeugs in einen Werkzeughalter sowie ein Verfahren zum automatisierten Ein- und Ausschrumpfen eines Werkzeugs in einen Werkzeughalter wie auch durch eine Förderbox für Werkzeughalter und/oder Werkzeuge mit den Merkmalen des jeweiligen unabhängigen Anspruchs.

Vorteilhafte Weiterbildungen der Erfindung sind Gegenstand abhängiger Ansprüche sowie der nachfolgenden Beschreibung - und beziehen sich sowohl auf die Geräte wie auch auf das Verfahren.

Gegebenenfalls verwendete Begriffe, wie oben, unten, vorne, hinten, links oder rechts sind - soweit nicht anders explizit definiert - nach üblichem Verständnis - auch in Ansehung der vorliegenden Figuren - zu verstehen. Begriffe, wie radial und axial, sind, soweit verwendet und nicht anders explizit definiert, in Bezug auf Mittel- bzw. Symmetrieachsen hier beschriebener Bauteile/Komponenten - auch in Ansehung der vorliegenden Figuren - zu verstehen.

Der Begriff "im Wesentlichen" - soweit verwendet - kann (nach höchstrichterlichem Verständnis) dahingehend verstanden werden, dass mit ihm von "einem praktisch noch erheblichen Maße" die Rede ist. Durch diese Begrifflichkeit so implizierte, mögliche Abweichungen vom Exakten, können sich so ohne Absicht (also ohne funktionale Begründung) aufgrund von Fertigungs- oder Montagetoleranzen o.ä. ergeben.

Die **Schrumpfvorrichtung** zum automatisierten Ein- und Ausschrumpfen eines Werkzeugs, wie beispielsweise ein Dreh- und/oder Rotationswerkzeug, wie Fräser, Bohrer u.Ä., in einen Werkzeughalter, wie insbesondere eine Schrumpfaufnahme, sieht ein Schrumpfgerät zu einem Ein- und/oder Ausschrumpfen eines Werkzeuges in einen Werkzeughalter (dieser im Folgenden gegebenenfalls auch synonym als Werkzeugaufnahme bezeichnet)sowie eine erste mehrachsige Handhabungsvorrichtung zum Versetzen von Werkzeughalter und Werkzeugen in der Schrumpfvorrichtung vor.

Gekennzeichnet ist die Schrumpfvorrichtung durch eine zweite, automatisch verfahrbare Handhabungsvorrichtung. Diese sieht einen einachsigen linearen Antrieb vor, so dass - mittels dieses einachsigen linearen Antriebs - das Werkzeug beim Ein- bzw. Ausschrumpfen entlang dieser einen (definierten) Achse (Z-Achse) relativ zu dem Werkzeughalter automatisch verfahrbar ist.

Das **Verfahren** zum automatisierten Ein- und Ausschrumpfen eines Werkzeugs in einen Werkzeughalter, insbesondere unter Verwendung der **Schrumpfvorrichtung** zum automatisierten Ein- und Ausschrumpfen eines Werkzeugs in einen Werkzeughalter sieht vor, dass unter Verwendung eines bzw. des einachsigen linearen Antriebs einer bzw. der zweiten, automatisch verfahrbaren Handhabungsvorrichtung das Werkzeug beim Ein- bzw. Ausschrumpfen entlang dieser einen Achse (Z-Achse) relativ zu dem Werkzeughalter automatisch verfahren wird.

Obwohl im Folgenden nur von einer Schrumpfvorrichtung die Rede ist, kann die Erfindung in analoger Weise auch auf andere Zellen mit anderen Spannverfahren für Werkzeuge als das Schrumpfen angewandt werden, beispielsweise für Spannzangenaufnahmen, Hydrodehnspannfutter, Weldon-Aufnahmen oder Messerkopfaufnahmen.

Hierbei tritt anstelle dann des Schrumpfgeräts das entsprechende andere Gerät/Vorrichtung (oder ggfl. (mehrere) andere Geräte/Vorrichtungen (, insbesondere unterschiedlicher Spannverfahren), welches das andere Spannverfahren bei dem Werkzeug bewerkstelligt - und welches insbesondere aber auch die erfindungsgemäße zweite, automatisch verfahrbare Handhabungsvorrichtung mit ihrem einachsigen linearen Antrieb (, mittels welchem dann auch hier das Werkzeug beim Ein- bzw. Ausführen in den Werkzeughalter entlang dieser einen (definierten) Achse (Z-Achse) relativ zu dem Werkzeughalter automatisch verfahrbar ist) aufweisen kann. Das bzw. die anderen - andere Spannverfahren bewerkstelligenden - Geräte/Vorrichtungen können auch zusammen mit dem Schrumpfgerät oder auch ohne dem Schrumpfgerät in der Zelle verwirklicht sein.

Insbesondere auch andere Vorrichtungsteile, die den eigentlichen Ein- oder Ausspannvorgang des Werkzeuges betreffen, können entsprechend angepasst sein. Hier eignet sich insbesondere eine weitere Handhabungseinheit, die analog zur ersten ausgeführt sein kann - und mit den anderen Spannverfahren interagiert.

Gegebenenfalls könnten so dann bei anderen Geräten für Spannzangenaufnahmen, Hydrodehnspannfutter, Weldon-Aufnahmen oder Messerkopfaufnahmen automatisiert dort durch entsprechende Handhabungseinheiten/-geräte Teile verschraubt bzw. montiert, beispielsweise Überwurfmuttern bei Spannzangen, oder Schrauben angezogen werden, beispielsweise Druckschrauben bei Hydrodehnspannfutter oder Spannschrauben bei Weldon-Aufnahmen.

Die entsprechenden Schraubeinrichtungen können beispielsweise fest an der Vorrichtung montiert sein und die Spannfutter an die Schraubeinrichtung insbesondere mithilfe der ersten Handhabungsvorrichtung herangeführt werden. Umgekehrt ist es möglich, die Schraubeinrichtung mit insbesondere der ersten Handhabungsvorrichtung und zum Spannfutter zu bewegen. Im letzteren Fall kann die Schraubeinrichtung fest an der Handhabungsvorrichtung montiert sein oder durch diese gegriffen werden.

Anschaulich und einfach ausgedrückt, die Erfindung greift - im Rahmen eines automatisierten Gesamtprozesses in einer Schrumpfzelle - beim automatischen Einschieben/Ausziehen eines Werkzeugs in einen erwärmten Werkzeughalter, d.h. beim eigentlichen Schrumpfen, - eben nicht auf eine bzw. die erste mehrachsige Handhabungsvorrichtung zurück - sondern auf eine bzw. die zweite, automatisch verfahrbare Handhabungsvorrichtung mit dem einachsigen linearen Antrieb, welcher so das Werkzeug längs dieser einen (definierten) Achse (Z-Achse) beim Schrumpfen verfährt.

Der Erfindung liegt die Überlegung zugrunde, dass nach Bisherigem - werden dort Werkzeuge manuell oder mittels üblicher mehrachsiger Industrieroboter beim Schrumpfen verfahren - die Genauigkeit meist vermindert ist, kann durch manuelles Manipulieren eine hohe bzw. angestrebte Genauigkeit nicht erreicht werden bzw. addieren sich Achsfehler bei den mehrachsigen Industrierobotern zu größeren Gesamtfehlern, so dass auch hier ggfl. eine angestrebte Genauigkeit nicht erreichbar ist. Insbesondere beim Einführen des Werkzeuges in den erwärmten Werkzeughalter können schon geringfügige Abweichungen zwischen der Achse des Werkzeuges und der Achse der Aufnahmebohrung des Werkzeughalters zu Problemen führen.

Diesem schafft die Erfindung Abhilfe - durch die bei der **Schrumpfvorrichtung** bzw. **Schrumpfzelle** und dem **Verfahren** vorgesehene zweite, automatisch verfahrbare Handhabungsvorrichtung, mittels welcher unter Verwendung deren einachsigen linearen Antriebs das Werkzeug beim Ein- bzw. Ausschrumpfen entlang dieser einen Achse (Z-Achse) relativ zu dem Werkzeughalter automatisch verfahrbar ist.

Achsfehler treten bei einer solchen linearen Verfahrbarkeit, wie bei der Erfindung, so gut wie nicht auf.

Hierdurch lässt sich (beim Schrumpfen) eine hochpräzise Positionierung eines Werkzeugs im Werkzeughalter vornehmen, welche in ihrer Genauigkeit dem Bisherigen überlegen ist; die Schrumpfgenauigkeit wird wesentlich gesteigert, der Automatisierungsgrad kann weiter gesteigert werden - ohne dass Einbu-βen bei der Automatisierung in Kauf genommen werden müssen.

Nach einer bevorzugten, die Genauigkeit weiter erhöhenden Ausgestaltung der Schrumpfvorrichtung ist vorgesehen, dass die zweite, automatisch verfahrbare Handhabungsvorrichtung einen um die eine Achse (Z-Achse) drehbaren Greiferkopf aufweist, insbesondere mit einer Winkelmessvorrichtung, unter Verwendung derer eine Drehposition des Greiferkopfes messbar ist.

Auch kann vorgesehen sein, dass der Greiferkopf mehrere Greifervorrichtungen zum Greifen von Werkzeugen aufweist, insbesondere, dass die mehreren Greifervorrichtungen gemäß einer vorgebbaren Teilung, im Speziellen gleichverteilt, um die eine Achse (Z-Achse) angeordnet sind. Die Greifervorrichtungen können auch wechselbar, insbesondere auch automatisiert wechselbar, ausgestaltet sein.

Auch erweist es sich als zweckmäßig, wenn die mehreren Greifervorrichtungen an Werkzeugen vorgebbaren Durchmesser angepasst sind.

Auch ist es vorteilhaft, wenn der Greiferkopf Kraftmesseinrichtungen aufweist, unter Verwendung derer eine Zugkraft und/oder eine Schubkraft der Greifervorrichtung auf ein Werkzeug messbar ist. Dabei können die Kraftmesseinrichtungen, beispielsweise Kraftmessdosen, in dem Greiferkopf oder auch in den Greifervorrichtungen verbaut sein.

Nach einer bevorzugten Ausgestaltung ist vorgesehen, dass eine bzw. jeder von den Greifervorrichtung zwei beim Greifvorgang relativ zueinander bewegbare, insbesondere elektromotorisch verfahrbare, Greiferbacken aufweist, welche insbesondere derart eingerichtet sind, dass ein Greifvorgang, insbesondere hinsichtlich einer Greifkraft, mess- und/oder überwachbar ist.

Auch kann bevorzugt vorgesehen sein, dass eine bzw. jede von den Greiferbacken eine Anschlagnase vorsieht.

Eine solche Greiferbacke kann auch auswechselbar und/oder positionsgenau klemmbar bei der Greifvorrichtung angeordnet sein.

Auch kann bei der Schrumpfvorrichtung eine Fördereinrichtung zu einem Transport von Werkzeughalter und Werkzeugen zu dem Schrumpfgerät (oder auch weg von diesem), wie ein Transportwagen, insbesondere in Form eines autonomen bzw. fahrerlosen Transportsystems (FTS), oder eine Palette, oder ein insbesondere umlaufendes, insbesondere segmentiertes, Förderband vorgesehen sein. Auch können mehrere Förderbänder mit Übergabeeinheiten zur Verkettung von Prozessabläufen und der Werkzeugzufuhr integriert oder vorgesehen sein.

Weiter kann auch vorgesehen sein, dass das Schrumpfgerät mindestens eine, insbesondere mehrere, insbesondere nebeneinander angeordnete Halteeinrichtungen, insbesondere Spindeln, aufweist, unter Verwendung deren Werkzeughalter beim Schrumpfen gespannt gehalten werden können. Die Halteeinrichtungen können alternativ auch an einer Schwenkvorrichtung oder einem Revolver, der um eine horizontale oder vertikale Achse schwenkbar ist, in axialer oder radialer Ausrichtung angeordnet sein.

Auch kann das Schrumpfgerät mindestens eine, insbesondere mehrere, insbesondere nebeneinander angeordnete und/oder an Werkzeughalter angepasste und/oder anpassbare, Induktionsspulenanordnungen aufweisen, unter Verwendung derer Werkzeughalter erwärmt werden können.

Eine solche Induktionsspulenanordnung kann Mittel zur Kühlung, insbesondere in Form einer Stoßvorkühlung, vorsehen, um insbesondere Prozesszeiten zu optimieren und ein schnelleres Klemmen des Werkzeughalters zu erreichen.

Auch kann eine solche Induktionsspulenanordnung einen Konzentrator bzw. eine Anschlag- bzw. Ferritscheibe vorsehen, welche, insbesondere im Fall eines Aufliegens eines Anschlagelements, wie beispielsweise einer Anschlagnase bei der Greifervorrichtung, an der Stirnseite des Werkzeughalters, insbesondere mit einer Freimachung oder einem Spalt, geschlitzt sein kann.

Zweckmäßigerweise ist die mindestens eine Spindel des Schrumpfgerätes horizontal und/oder vertikal verfahrbar, insbesondere mit einer Hebewegüberwachungseinrichtung, unter Verwendung derer ein vertikaler Verfahrweg beim vertikalen Verfahren einer Spindel überwachbar und/oder messbar ist.

Ferner ist es vorteilhaft, wenn das Schrumpfgerät eine Kollisionsüberwachungsvorrichtung aufweist, unter Verwendung derer eine Kollision zwischen einem Werkzeughalter und einer Induktionsspulenanordnung des Schrumpfgerätes detektierbar ist.

Ferner kann auch eine Lesevorrichtung vorgesehen sein, welche an der Haltevorrichtung für den Werkzeughalter, insbesondere der Spindel, oder insbesondere an der ersten mehrachsigen Handhabungsvorrichtung angeordnet ist und/oder welche derart eingerichtet ist, dass, wenn ein Werkzeughalter in einer der Spindeln des Schrumpfgeräts gespannt gehalten wird, insbesondere bei einem Drehen der Spindel eine an dem Werkzeughalter angebrachte Markierung, insbesondere ein Werkzeughaltercode, lesbar ist.

Auch kann es zweckmäßig sein, eine Zentrierstation zu einem Spannen und (Aus-)Richten eines Werkzeuges vorzusehen. Beispielsweise kann eine solche Zentrierstation Spannbacken aufweisen, welche ein Werkzeug beim Spannen zentrieren. Zweckmä-ßig kann es dabei sein, mehrere solcher Spannbacken, beispielsweise drei oder vier Spannbacken, symmetrisch zueinander anzuordnen, welche dann ein Werkzeug zentriert spannen und gespannt halten können.

Nach einer bevorzugten Weiterbildung ist auch eine, insbesondere im Bereich der Zentrierstation angeordnete, Ausrichtungskontrolleinrichtung vorgesehen, unter Verwendung derer eine Ausrichtung eines, insbesondere aus der Zentrierstation mittels der zweiten, automatisch verfahrbaren Handhabungsvorrichtung entnommenen, Werkzeugs bestimmbar und/oder überwachbar ist. Eine solche Ausrichtungskontrolleinrichtung kann beispielsweise ein laserbasiertes Messsystem sein.

Weiterhin ist auch eine Messeinrichtung zweckmäßig, insbesondere ein Laser, zu einem Vermessen eines Werkzeugs.

Vorteilhaft ist es weiter auch, wenn die erste mehrachsige Handhabungsvorrichtung ein Mehrachsen-Gelenkarmroboter ist.

Zweckmäßig ist es auch, wenn diese die erste mehrachsige Handhabungsvorrichtung bzw. der Mehrachsen-Gelenkarmroboter einen Doppelgreifer für ein Greifen eines Werkzeugs (einerseits, erster Greifer) und für ein Greifen eines Werkzeughalters (andererseits, zweiter Greifer) aufweist.

Auch ist es zweckmäßig, eine Kühlstation zur Kühlung, insbesondere durch das Schrumpfen erwärmter, Werkzeughalter vorzusehen.

Eine solche Kühlstation kann mehrere, insbesondere nebeneinander angeordnete, Halteeinrichtungen, insbesondere Spindeln, vorsehen, unter Verwendung deren Werkzeughalter beim Kühlen gehalten werden können. Die Halteeinrichtungen können alternativ auch an einer Schwenkvorrichtung oder einem Revolver, der um eine horizontale oder vertikale Achse schwenkbar ist, in axialer oder radialer Ausrichtung angeordnet sein.

Auch ist es zweckmäßig, wenn die Kühlstation einen Kühlaufsatz vorsieht, welcher über an den Spindeln gehaltener Werkzeughalter überstülpbar ist.

Bevorzugt ist der Kühlaufsatz eingerichtet zur Erzeugung einer Wirbelstromkühlung (Zyklonkühlung). Ein solcher Kühlaufsatz ist beispielsweise in der Offenlegungsschrift zur Anmeldung mit dem amtl. Aktenzeichen DE 10 2022 114 046.6 beschrieben sein.

Ferner ist es zweckmäßig, wenn bei der Schrumpfvorrichtung auch ein Schaltschrank und/oder eine Wuchtvorrichtung und/oder eine Voreinstellvorrichtung und/oder eine Reinigungsvorrichtung und/oder ein Steuerrechner vorgesehen ist bzw. sind, auf welchem Steuerrechner insbesondere ein Steuerprogramm für eine Steuerung der **Schrumpfvorrichtung** gespeichert ist. Der Steuerrechner kann auch einen Bildschirm, eine Eingabeeinheit (beispielsweise eine Tastatur) und einen Drucker vorsehen.

Auch kann es zweckmäßig sein, wenn bei der Schrumpfvorrichtung eine Reinigungsstation, insbesondere Ultraschallreinigung, insbesondere zum Reinigen, besonders bevorzugt zum Reinigen und Trocknen, von Werkzeugen vor dem Schrumpfen und/oder eine Induktionsspulenanordnung mit wechselbarer Anschlagscheibe vorgesehen sind/ist.

Die wechselbaren Anschlagscheiben können automatisiert gewechselt werden, so dass alle verschiedensten Werkzeugaufnahmen (z.B. "ultrakurz") geschrumpft werden können.

Anstelle oder zusätzlich von/zur Ultraschallreinigung können auch Düsen mit Reinigungsfluid wie Wasser, Luft oder Öl vorgesehen sein. Alternativ kann die Reinigungsstation auch mit Bürsten, Wischkörpern oder klebrigen Tupfern oder dgl. versehen sein.

Die Steuerung kann auch mit anderen Prozesssystemen bzw. Prozessprogrammen kommunizieren bzw. diese einbinden bzw. dort eingebunden sein, wie beispielsweise ein Tool Management Programm o.Ä.. Auch kann die Steuerung beispielsweise auch selbst wiederum Bestandteil oder eingebunden sein in die übergeordnete Prozessumgebung bzw. eine übergeordnete Prozesssteuerung, insbesondere für eine industrielle Produktion bzw. Fertigung von Werkstücken. Die Schrumpfzelle kann so integrierter (funktionell, wie physisch) Bestandteil einer komplexen, industriellen (Gesamt-)Prozessumgebung sein.

Auch kann eine Sicherheitsabschirmung, beispielsweise in Form eines Sicherheitszauns, bei der Schrumpfvorrichtung vorgesehen sein, mittels welcher insbesondere weite Bereiche der **Schrumpfvorrichtung** gegenüber einer Umgebung um die Schrumpfvorrichtung abschirmbar sind.

Eine solche Sicherheitsabschirmung bzw. ein solcher Sicherheitszaun kann auch Durchgänge, beispielsweise Türen, vorsehen, um so Zugang zu bestimmten Bereichen der Schrumpfvorrichtung zu ermöglichen. Die Türen können insbesondere automatisch ver- bzw. entriegelbar gestaltet sein.

Ferner ist es zweckmäßig, wenn bei der **Schrumpfvorrichtung** und/oder bei dem **Verfahren** zumindest einer, insbesondere mehrere oder alle, der folgenden Verfahrensschritte, insbesondere in gelisteter Reihenfolge, durchgeführt werden:
(a) Bestückung einer auf einer Fördereinrichtung angeordneten Förderbox mit einem (einzuschrumpfenden) Werkzeug und/oder einem Werkzeughalter und/oder mit einem Werkzeughalter mit einem (auszuschrumpfenden) Werkzeug oder Ablage einer mit einem (einzuschrumpfenden) Werkzeug und einem Werkzeughalter oder einem Werkzeughalter mit einem (auszuschrumpfenden) Werkzeug befüllten Förderbox auf einer Fördereinrichtung,
(b) Transport einer mit einem (einzuschrumpfenden) Werkzeug und einem Werkzeughalter oder einem Werkzeughalter mit einem (auszuschrumpfenden) Werkzeug bestückten Förderbox mittels einer Fördereinrichtung zu dem Schrumpfgerät, insbesondere in eine Nähe einer (Spann-)Spindel des Schrumpfgeräts,
(c) Versetzen eines Werkzeughalters von einer Förderbox auf eine Spindel des Schrumpfgeräts, insbesondere unter Verwendung einer ersten mehrachsigen Handhabungsvorrichtung zum Versetzen von Werkzeughalter und Werkzeugen,
(d) Spannen eines Werkzeughalters auf einer Spindel des Schrumpfgeräts,
(e) Rotieren eines auf einer Spindel des Schrumpfgerätes gespannten Werkzeughalters, insbesondere um die eine Achse (Z-achse) und insbesondere um 360°, und Lesen einer auf dem Werkzeughalter angebrachten Markierung, insbesondere eines auf dem Werkzeughalter angebrachten Werkzeughaltercodes,
(f) Bereitstellen von Werkzeughalter- und/oder Werkzeug- und/oder Schrumpfdaten bzw. -parameter, insbesondere unter Verwendung einer auf dem Werkzeughalter angebrachten und gelesenen Markierung, insbesondere eines auf dem Werkzeughalter angebrachten und gelesenen Werkzeughaltercodes,
(g) Versetzen eines (einzuschrumpfenden) Werkzeuges von einer Förderbox in eine Zentrierstation, insbesondere unter Verwendung einer ersten mehrachsigen Handhabungsvorrichtung zum Versetzen von Werkzeughalter und Werkzeugen,
(h) Spannen und/oder Ausrichten eines (einzuschrumpfenden) Werkzeugs in einer Zentrierstation,
(i) Greifen eines in einer Zentrierstation gespannten (einzuschrumpfenden) Werkzeugs mittels der zweiten, automatisch verfahrbaren Handhabungsvorrichtung, insbesondere derart, dass das (einzuschrumpfende) Werkzeug nach dem Einschrumpfen in einen Werkzeughalter eine vorgebbare Position in dem Werkzeughalter aufweist,
(j) Vermessen eines durch die zweite, automatisch verfahrbare Handhabungsvorrichtung gegriffenen (einzuschrumpfenden) Werkzeugs, insbesondere unter Verwendung eines Messlasers und/oder insbesondere Vermessen einer Ausrichtung des (einzuschrumpfenden) Werkzeugs, insbesondere hinsichtlich der einen Achse (Z-Achse) und/oder Vermessen der Länge des (einzuschrumpfenden) Werkzeugs,
(k) Verfahren eines auf einer Spindel des Schrumpfgerätes gespannten Werkzeughalters, insbesondere Verfahren des Werkzeughalters bis in Verlängerung der einen Achse (Z-Achse) unterhalb einer Induktionsspulenanordnung des Schrumpfgeräts,
(l) Ermitteln eines Anhebewegs eines auf einer Spindel des Schrumpfgerätes gespannten Werkzeughalters, insbesondere längs der einen Achse (Z-Achse) und insbesondere unter Verwendung einer Geometrie des Werkzeughalters,
(m) Anheben eines auf einer Spindel des Schrumpfgerätes gespannten Werkzeughalters, insbesondere längs der einen Achse (Z-Achse), insbesondere bis der Werkzeughalter in einer Induktionsspulenanordnung, insbesondere an Anschlagscheiben der Induktionsspulenanordnung, anschlägt,
(n) Überwachung eines Anhebevorgangs eines auf einer Spindel des Schrumpfgerätes gespannten Werkzeughalters hinsichtlich eines Anhebewegs und/oder einer Kollision mit einer Induktionsspulenanordnung, insbesondere einer Kollision mit Anschlagscheiben der Induktionsspulenanordnung,
   (Ausschrumpfen eines "alten/verbrauchten" Werkzeugs aus einem Werkzeughalter und Einschrumpfen eines neuen Werkzeugs in den Werkzeughalter)
(o) Erwärmen eines Werkzeughalters unter Verwendung einer Induktionsspulenanordnung des Schrumpfgeräts,
(p) Greifen eines in einem Werkzeughalter angeordneten (auszuschrumpfenden) Werkzeugs durch die zweite, automatisch verfahrbare Handhabungsvorrichtung und Verfahren des durch die zweite, automatisch verfahrbare Handhabungsvorrichtung gegriffenen (auszuschrumpfenden) Werkzeugs längs der einen Achse (Z-Achse) aus dem Werkzeughalter, insbesondere mit einer Überwachung des Verfahrens des gegriffenen Werkzeugs hinsichtlich einer Zugkraft auf das (auszuschrumpfende) Werkzeug,
(q) Schwenken eines Greiferkopfes der zweiten, automatisch verfahrbare Handhabungsvorrichtung;
(r) Verfahren (Einsetzen) eines durch die zweite, automatisch verfahrbare Handhabungsvorrichtung gegriffenen (einzuschrumpfenden) Werkzeugs entlang der einen Achse (Z-Achse) relativ zu dem Werkzeughalter in eine vorgebbare Schrumpfposition bezüglich des Werkzeughalters, insbesondere Verfahren des durch die zweite, automatisch verfahrbare Handhabungsvorrichtung gegriffenen (einzuschrumpfenden) Werkzeugs entlang der einen Achse (Z-Achse) relativ zu dem Werkzeughalter solange bis Greifernasen eines Greiferkopfes der zweiten, automatisch verfahrbaren Handhabungsvorrichtung auf eine obere Stirnseite des Werkzeughalters oder auf einer Anschlagscheibe der Induktionsspulenanordnung aufliegen, insbesondere mit einer Überwachung des Verfahrens des gegriffenen Werkzeugs hinsichtlich einer Schubkraft auf das (einzuschrumpfende) Werkzeug, (im Fall eines Aufliegens an der Stirnseite des Werkzeughalters kann die Anschlagscheibe, insbesondere mit einer Freimachung oder einem Spalt, geschlitzt sein)
(s) kurzzeitiges Halten eines (in einen Werkzeughalter einzuschrumpfenden) Werkzeugs mittels der zweiten, automatisch verfahrbaren Handhabungsvorrichtung, insbesondere zumindest solange bis durch Abkühlen des Werkzeughalters das (einzuschrumpfende) Werkzeug gespannt wird, und anschließendes Lösen des Werkzeugs
(t) Absenken eines auf einer Spindel des Schrumpfgerätes gespannten (, ein gerade neu eingeschrumpftes Werkzeug spannenden) Werkzeughalters, insbesondere längs der einen Achse (Z-Achse),
(u) Versetzen eines auf einer Spindel des Schrumpfgerätes gespannten (, ein gerade neu eingeschrumpftes Werkzeug spannenden) Werkzeughalters unter Verwendung einer ersten mehrachsigen Handhabungsvorrichtung in eine Kühlstation,
(v) Kühlen eines (ein gerade neu eingeschrumpftes Werkzeug spannenden) Werkzeughalters, insbesondere unter Verwendung einer Wirbelstromkühlung (Zyklonkühlung),
(w) Versetzen eines (ein gerade neu eingeschrumpftes Werkzeug spannenden) Werkzeughalters unter Verwendung einer ersten mehrachsigen Handhabungsvorrichtung in eine Wuchtvorrichtung und/oder in eine Voreinstelleinrichtung,
(x) Vermessen eines (ein gerade neu eingeschrumpftes Werkzeug spannenden) Werkzeughalters, insbesondere in einer Voreinstelleinrichtung oder in einer Kühlstation oder in einer Wuchtvorrichtung,
(y) Verfahren eines (gerade ausgeschrumpften) Werkzeugs mittels der zweiten, automatisch verfahrbaren Handhabungsvorrichtung, insbesondere zu einer Förderbox und/oder zu einer Zentrierstation;
(z) Versetzen eines (gekühlten) Werkzeughalters in eine Förderbox.

Ferner kann es auch zweckmäßig sein, wenn ein Zentrieren und/oder ein Ausrichten eines (einzuschrumpfenden) Werkzeugs durch ein Drehen eines Werkzeughalters bei einem Einsetzen des (einzuschrumpfenden) Werkzeugs in den Werkzeughalter erfolgt. Solches kann beispielsweise als Alternative zu der vorerwähnten Zentrierstation - oder auch als Zusätzliches zu einer solchen - vorgesehen sein.

Ein weiterer wichtiger Aspekt der Erfindung, welcher gegebenenfalls auch Gegenstand einer Teilanmeldung - unabhängig auch von der Schrumpfvorrichtung, d.h. unabhängig von einer bestimmten Spanntechnik - bei/mit entsprechendem Spann- bzw. Montageverfahren (beispielsweise so auch für eine Vorrichtung zur Montage von Weldonfutter oder von Hydrodehnspannfutter, eine Pressstation für die Montage von Werkzeugen in Spannfutter durch Einpressen oder eine Schraubvorrichtung bei/für die Montage von Spannzangen u.Ä.), - gemacht werden kann, ist eine Überwachung bzw. Überprüfung des Werkzeugs bzw. Überwachung bzw. Überprüfung des Werkzeughalters - in der Schrumpfvorrichtung.

Insofern kann als Definition die Schrumpfvorrichtung auch (allg.) als Montagestation verstanden werden.

Eine Überwachung bzw. Überprüfung des Werkzeugs bzw. des Werkzeughalters kann insbesondere auch eine Vermessung und/oder Validierung des jeweiligen Bauteils miteinschließen. Diesbezüglich mag es von Bedeutung sein, dass das zu bearbeitende Bauteil, wie ein Werkzeug und/oder ein Werkzeughalter - beispielsweise mittels der vorerwähnten Lesevorrichtung und diesbezüglicher Code-Erkennung - (in der Schrumpfvorrichtung bzw. im System bzw. Prozess) erkannt wurde - und so Daten, Werte, u.Ä. über das zu bearbeitende Bauteil bekannt sind (vgl. vorerwähnte Lesevorrichtung bzw. auch Schritte e) und f) .

Die Überwachung bzw. Überprüfung des Werkzeugs bzw. Überwachung bzw. Überprüfung des Werkzeughalters kann zweckmäßig insbesondere
(1) am Werkzeughalter (mit oder ohne Werkzeug) vor dem Ein- bzw. Ausschrumpfen und/oder
(2) an dem Werkzeug, welches (dann) eingeschrumpft werden soll, und/oder
(3) während des Ein- bzw. Ausschrumpfens eines Werkzeugs in den Werkzeughalter, wobei hier insbesondere dann Korrekturen, insbesondere Lage-/Positionskorrekturen (im/während/simultan zum (Schrumpf-)Prozess) - auf Basis aus der Überwachung/Vermessung/Validierung erlangter Informationen, insbesondere geometrischer Informationen bzw. Daten und Werte - durchgeführt werden können.

Hierzu, d.h. bei der Überwachung bzw. Überprüfung des Werkzeugs bzw. Überwachung bzw. Überprüfung des Werkzeughalters (mit oder ohne Werkzeug), kann eine - gegebenenfalls - weitere Messeinrichtung, die dann insbesondere bzw. im Speziellen zu einem Vermessen eines Werkzeugs und/oder Werkzeughalters (mit oder ohne Werkzeug) eingesetzt wird, vorgesehen sein.

Bei der Überwachung bzw. Überprüfung des Werkzeugs bzw. Überwachung bzw. Überprüfung des Werkzeughalters (mit oder ohne Werkzeug), kann auch eine - gegebenenfalls - weitere Haltevorrichtung vorgesehen werden, unter Verwendung welcher insbesondere bzw. im Speziellen ein Werkzeughalter und/oder ein Werkzeug, insbesondere bei einem Überprüfen unter Verwendung der weiteren Messeinrichtung, gehalten, insbesondere gespannt gehalten, werden kann.

Die weitere Messeinrichtung kann auch anstelle der vorerwähnten Messvorrichtung (beispielsweise des Lasers) (oder anderer ggfl. in der Schrumpfvorrichtung auch eingesetzter Messvorrichtungen) bei der Schrumpfvorrichtung eingesetzt werden. Entsprechendes gilt für die weitere Haltevorrichtung - in Bezug auf vorerwähnte Haltevorrichtungen/Spindeln.

Beispielsweise - mit der weiteren Messeinrichtung und/oder der weiteren Haltevorrichtung - wäre es möglich, vorerwähnte Zentrierstation hierdurch zu ersetzen.

Es erscheint zweckmäßig zu sein, insbesondere um ein leistungsfähiges und/oder hochgenaues Messsystem zu Verfügung stellen zu können, dass die weitere Messeinrichtung ein Durchlicht- bzw. Auflichtmesssystem ist bzw. nach dem Durchlicht- bzw. Auflichtverfahren arbeitet. Gegebenenfalls könnte auch ein Lasermesssystem zum Einsatz kommen.

Hierbei können insbesondere Genauigkeitsmessungen im µm Bereich , insbesondere im Bereich einer h6 Toleranz oder auch genauer, erreicht werden.

Weiterhin erscheint es vorteilhaft, insbesondere um alle Messpositionen (bei dem Werkzeug und/oder der Werkhalter (synonym auch Werkzeugaufnahmen) erreichen bzw. um das gesamte Werkzeug bzw. den gesamten Werkzeughalter bzw. das gesamte Gesamtwerkzeug (aus Werkzeug und Werkzeughalter) "abscannen" zu können, dass die weitere Messeinrichtung zumindest in einer, insbesondere in zwei Raumrichtungen verfahrbar ist, insbesondere im Wesentlichen längs der einen Achse (Z-Achse) und/oder im Wesentlichen quer zu der einen Achse (Z-Achse) verfahrbar ist. Entsprechendes kann auch die weitere Haltevorrichtung vorsehen, d.h. es ist hier zweckmäßig, wenn die weitere Haltevorrichtung horizontal, insbesondere im Wesentlichen quer zu der einen Achse (Z-Achse), und/oder vertikal, insbesondere im Wesentlichen längs der einen Achse (Z-Achse), verfahrbar ist. Insbesondere ist es vorteilhaft, wenn die weitere Haltevorrichtung so gestaltet ist, dass auch der eingespannte Teil des Werkzeugschaftes noch zur Vermessung zugänglich/sichtbar ist.

Von Vorteil ist es insbesondere auch, wenn die weitere Haltevorrichtung drehbar ist und/oder ein, insbesondere drehbares, Backenfutter und/oder einen Rundtisch, welcher drehbar und/oder in anderen Raumrichtungen bewegbar ist, aufweist, kann nämlich so das gehaltene Teil rundherum (360°), d.h. von allen Seiten, vermessen werden. So kann insbesondere dadurch auch (insbesondere bei einer Überwachung bzw. Überprüfung des Werkzeughalters (mit oder ohne Werkzeug) bzw. der Überwachung bzw. Überprüfung des Werkzeugs), eine Rundheit bzw. eine Zylindrizität des Bauteils gemessen werden. Auch andere "Auffälligkeiten" bei der Geometrie des Bauteils, beispielsweise Weldon-Flächen am Werkzeugschaft, können hierdurch besonders gut detektiert werden. Auch Greif- und/oder Haltebereiche (am Werkzeugschaft) können hierdurch gut erkannt bzw. ermittelt werden. Dazu ist es auch vorteilhaft, die tatsächliche Länge des Schneidenbereichs zu bestimmen, da sich z. B. nach dem Nachschleifen des Werkzeuges der zylindrische Schaftbereich, der zum Greifen des Werkzeuges zur Verfügung steht, verkürzt.

Genauso könnte sich aber die weitere Messeinheit um das zu prüfende Bauteil bzw. Werkzeug und/oder Werkzeughalter/- aufnahme drehen.

Bei der Überwachung bzw. Überprüfung der Werkzeugaufnahme, mit oder ohne Werkzeug, und/oder bei der Überwachung bzw. Überprüfung des Werkzeugs, ist es insbesondere zweckmäßig, wenn die weitere Messeinrichtung im Wesentlichen längs der einen Achse (Z-Achse) verfahren wird. Damit lässt sich so das Bauteil in seiner gesamten Länge, insbesondere auch sein höchster Punkt, überwachen bzw. überprüfen bzw. vermessen. Auch andere "besondere" Punkte (Konturpunkte), wie Kanten, Absätze u.Ä. lassen sich hierdurch überwachen bzw. überprüfen bzw. vermessen.

Insbesondere ist auch zweckmäßig, mit der weiteren Messeinrichtung, insbesondere bei der Überwachung bzw. Überprüfung der Werkzeugaufnahme, mit oder ohne Werkzeug, und/oder Überwachung bzw. Überprüfung des Werkzeugs eine Geometrie zu vermessen, wie eine Gesamtlänge, insbesondere von der Werkzeugaufnahme mit Werkzeug (insbesondere validiert als "i.O." bzw. "in Toleranz"), eine Werkzeuglänge, einen Werkzeugdurchmesser, eine Schaftlänge, eine Auskraglänge, eine Schneidenlänge, eine Schneidnutlänge, einen Schneidendurchmesser, ein Werkzeugschaftdurchmesser, eine Rundheit bzw. Zylindrizität, insbesondere eines Greifbereichs und/oder eines Werkzeugschaftes (insbesondere in Genauigkeit einer h6 Schafttoleranz), einen Halsfreischliff, Toleranzen am Bauteil, Zustände von ggfl. mehrteiligen Werkzeugen (beliebigen Werkzeugen), z.B. Vorhandensein und/oder korrekter Sitz von Wendeplatten u.Ä., einen höchsten Punkt des Werkzeugs und/oder ein Längen-A-Maß (insbesondere validiert als "i.O"). Auch Kollisionsprüfungen (z.B. mit einem Greifer oder einer Schrumpfspule) können durchgeführt werden. Sind derartige Informationen nun messbar bzw. ermittelbar, können auch dadurch weitergehende Daten/Werte/Informationen zum Werkzeug bzw. Werkzeughalter ermittelt werden, wie beispielsweise eine Länge, wie weit das Werkzeug in dem Werkzeughalter steckt und ob diese Länge für den Betrieb des Werkzeuges ausreichend ist, Prognosen über einen Zustand des Werkzeuges, insbesondere Lebensdauerprognosen von Werkzeugen. Denkbar ist auch, polygone/polygonale Werkzeuge bzw. Werkzeugschäfte oder auch Werkzeuge mit beliebig geformten Werkzeugschäften damit genau auf die richtige Lage zu orientieren, fixieren bzw. montieren und einzuschrumpfen.

Dies alles kann dann für die Validierung des Werkzeugs und/oder des Werkzeughalters (mit oder ohne Werkzeug) verwendet werden.

Darüber hinaus kann es auch zweckmäßig sein, insbesondere bei der Überwachung bzw. Überprüfung der Werkzeugaufnahme, mit Werkzeug (oder ohne Werkzeug), und/oder der Überwachung bzw. Überprüfung des Werkzeugs, den Werkzeugschaft hinsichtlich auf einen Greifbereich (für einen Greifer), einen Schneidbereich, und/oder auf, insbesondere geometrische, "Auffälligkeiten" am Werkzeugschaft zu überprüfen.

Darüber hinaus kann es auch zweckmäßig sein, insbesondere bei der Überwachung bzw. Überprüfung der Werkzeugaufnahme, mit Werkzeug (oder ohne Werkzeug), und/oder der Überwachung bzw. Überprüfung des Werkzeugs, das Werkzeug vollumfänglich zu vermessen, prüfen und/oder zu validieren. (Entsprechendes gilt natürlich auch, wie vorerwähnt, für den Werkzeughalter.)

Darüber hinaus kann es auch zweckmäßig sein, die Überwachung bzw. Überprüfung auch beim/während des Einschrumpfens und/oder beim/während des Ausschrumpfens durchzuführen, insbesondere wobei beim Ausschrumpfen überwacht bzw. überprüft wird, ob sich das Werkzeug aus dem Werkzeughalter ausschrumpfen lässt.

Dabei erscheint es hier auch als besonders vorteilhaft, wenn simultan zu der bzw. während der Überwachung bzw. Überprüfung unter Verwendung von aus der Überwachung bzw. Überprüfung erlangter Informationen, Korrekturen beim Einschrumpfen und/oder Ausschrumpfen bzw. Montieren vorgenommen werden.

So kann beispielsweise beim Einschrumpfen eine Länge des Werkzeugs korrigiert werden.

Im Speziellen sei nochmals darauf verwiesen, dass insbesondere
- eine Überwachung bzw. Überprüfung des Werkzeugs und/oder des Werkzeughalters (mit oder ohne Werkzeug), insbesondere unter Verwendung des weiteren Messsystems und/oder der weiteren Haltevorrichtung, durchgeführt werden kann,
- die Werkzeugaufnahme, mit oder ohne Werkzeug, überwacht bzw. überprüft werden kann, insbesondere wobei das weitere Messsystem im Wesentlichen längs der einen Achse (Z-Achse) verfahren wird, und/oder eine Gesamtlänge, insbesondere von der Werkzeugaufnahme mit Werkzeug (insbesondere als "i.O." bzw. "in Toleranz"), ein Schneidendurchmesser, ein Werkzeugschaftdurchmesser (insbesondere in Genauigkeit einer h6 Schafttoleranz) und/oder ein Längen-A-Maß (insbesondere als "i.O") überwacht und/oder geprüft werden und/oder Kollisionsprüfungen durchgeführt werden,
- das Werkzeug überwacht bzw. überprüft werden kann, insbesondere wobei das Werkzeug in der weiteren Haltevorrichtung gehalten und/oder durch diese gedreht wird,
- das Werkzeug überwacht bzw. überprüft werden kann, insbesondere wobei das weitere Messsystem zumindest einen obersten Punkt des Werkzeuges, einen Greifbereich an dem Werkzeug, eine Werkzeuglänge und/oder einen Werkzeugdurchmesser bzw. Werkzeugschaftdurchmesser (insbesondere in Genauigkeit einer h6 Schafttoleranz) überprüft und/oder wobei das Werkzeug vollumfänglich geprüft und validiert wird und/oder Kollisionsprüfungen durchgeführt werden,
- die Werkzeugaufnahme beim Einschrumpfen und/oder beim Ausschrumpfen überwacht bzw. überprüft werden kann, insbesondere wobei beim Ausschrumpfen überwacht bzw. überprüft wird, ob sich das Werkzeug aus dem Werkzeughalter ausschrumpfen lässt,
- simultan zu der bzw. während der Überwachung bzw. Überprüfung, insbesondere unter Verwendung von aus der Überwachung bzw. Überprüfung erlangter Informationen, Korrekturen beim Einschrumpfen und/oder Ausschrumpfen vorgenommen werden können und/oder
- beim Einschrumpfen eine Länge des Werkzeugs korrigiert werden kann.

Ungeachtet dessen, dass die Schrumpfvorrichtung bezüglich der Spanntechnik des Schrumpfens vorgesehen ist, kann die Vorrichtung auch als Vorrichtung für andere Arten von Werkzeugaufnahmen/Spannfuttern bzw. Spanntechniken, wie Hydrodehnspannfutter, Weldon-Futter, Spannzangen, Messerkopfaufnahmen und/oder eingepressten Werkzeugen u.Ä., vorgesehen sein. Hierbei tritt anstelle des Schrumpfgerätes die entsprechend andersartige Montagevorrichtung - für z.B. eines Hydrodehnspannfutters, einer Spannzange, ... (s. oben).

Insbesondere da auch bei der Überwachung bzw. Überprüfung der Werkzeugaufnahme, mit Werkzeug (oder ohne Werkzeug), und/oder der Überwachung bzw. Überprüfung des Werkzeugs, beispielsweise hier beim Abscannen, die entsprechenden andersartigen Werkzeugaufnahmen als solche erkannt werden können.

Durch die Überwachung bzw. Überprüfung des Werkzeugs bzw. Überwachung bzw. Überprüfung des Werkzeughalters kann die Prozess- und Ablaufsicherheit, hier bei der **Schrumpfvorrichtung** und dem **Verfahren,** maximiert werden.

Des Weiteren kann dadurch insbesondere auch die Genauigkeit bei der Werkzeugmontage bzw. dem montierten Gesamtwerkzeug gesteigert werden.

Die Effizienz und auch die Effektivität der Schrumpfvorrichtung bzw. des Verfahren werden erhöht.

Weiterhin kann es sinnvoll sein, eine zweite weitere Messeinrichtung und/oder eine zweite weitere Haltevorrichtung - insbesondere mit all den vorerwähnten Funktionalitäten und Ausgestaltungsformen vorzusehen. Gegebenenfalls könnten diese zweite weitere Messeinrichtung und/oder zweite weitere Haltevorrichtung dann bislang vorhandene, entsprechende Stationen ersetzten - und/oder in bereits bestehende integriert werden.

Beispielsweise könnte eine solche zweite weitere Messeinrichtung dann dafür vorgesehen sein, fertige montierte Gesamtwerkzeuge - insbesondere voll - zu überprüfen (Letztvermessung, Vermessung aller Werkzeug-/halter-Daten).

Einer solche zweite weitere (vollumfängliche) Messeinrichtung ermöglichte so dann die komplette Funktionalität eines Voreinstellgeräts - in der Schrumpfvorrichtung.

Ein anderer weiterer unabhängiger Aspekt der Erfindung, welcher gegebenenfalls auch Gegenstand einer Teilanmeldung gemacht werden kann, ist eine Förder- bzw. Transportbox für Werkzeughalter und/oder Werkzeuge, wie sie insbesondere bei der vorbeschriebenen Schrumpfvorrichtung zum automatisierten Ein- und Ausschrumpfen eines Werkzeugs in einen Werkzeughalter bzw. bei vorgeschriebenen Verfahren zum automatisierten Ein- und Ausschrumpfen eines Werkzeugs in einen Werkzeughalter - dort zu einem Transport von Werkzeugen und/oder Werkzeughalter - verwendet bzw. eingesetzt werden kann.

Die **Förderbox für Werkzeughalter und/oder Werkzeugen** ist gekennzeichnet durch einen Grundkörper mit einer Oberseite und einer Vielzahl dortig angeordneter, sich in ein Inneres des Grundkörpers erstreckender Aufnahmeöffnungen für Werkzeughalter und Werkzeuge.

Jede im Grundkörper angeordnete Aufnahmeöffnung für einen Werkzeughalter bzw. für ein Werkzeug weist dabei eine spiegelbildlich am Grundkörper angeordnete, identische Aufnahmeöffnung auf.

Vereinfacht und anschaulich ausgedrückt, alle Aufnahmeöffnungen (für Werkzeuge und Werkzeughalter) sind doppelt, einmal in ihren "Original", einmal - jeweils spiegelbildlich dazu angeordnet - mit bzw. in ihrem identischen Spiegelbild.

Spiegelbild kann dabei derart verstanden werden, dass jeweils die beiden zusammengehörigen Aufnahmeöffnungen (für einen bestimmten Werkzeughalter bzw. ein bestimmtes Werkzeug) gemäß einer Symmetrieachse/Spiegelachse symmetrisch bzw. spiegelbildlich zueinander angeordnet sind.

Sehr einfach kann dies beispielsweise realisiert sein, wenn die Aufnahmeöffnungen achsensymmetrisch zueinander angeordnet sind.

Vorteilhafterweise sind die Aufnahmeöffnungen für die Werkzeuge an Werkzeugdurchmesser und/oder Werkzeuglängen angepasst. Dadurch wird ermöglicht, dass in der Förderbox aufgenommene Werkzeuge besser und sicherer dort aufgenommen werden können. Eine Handhabung von Werkzeugen in bzw. aus der Förderbox wird dadurch erleichtert.

Ferner kann auch vorgesehen sein, dass die zwei zusammengehörigen Aufnahmeöffnungen für einen Werkzeughalter, d.h. die eine ("erste") Aufnahmeöffnung sowie ihr ("zweites") identisches Spielbild bzw. ihre spiegelbildliche Aufnahmeöffnung für einen Werkzeughalter, überschneidend angeordnet sind. Dies erreicht Platzeinsparung bei gleichzeitig gewährter Stand-/Aufnahmesicherheit.

Auch ist es - aus prozesstechnischen und automatisierungstechnischen Gründen - vorteilhaft, wenn die Aufnahmeöffnungen für die Werkzeuge einerseits und die Aufnahmeöffnungen für die Werkzeughalter andererseits blockweise und/oder voneinander abgesetzt im Grundkörper angeordnet sind.

Weiterhin kann vorgesehen sein, dass die Aufnahmeöffnungen für die Werkzeuge und die Werkzeughalter einerseits und ihre spiegelbildlich angeordneten identischen Aufnahmeöffnungen andererseits eine sie unterscheidende Markierung aufweisen.

Die Markierung kann in beliebiger Form ausgeführt sein, beispielsweise farblich und/oder begrifflich. Sollen so beispielsweise die einen Aufnahmeöffnungen dazu verwendet werden, um dort "neue" Teile bzw. Werkzeuge oder Werkzeughalter vor einem Einschrumpfen abzulegen, - und deren spiegelbildliche Aufnahmeöffnungen, um dort ver-/gebrauchte Teile bzw. Werkzeuge oder Werkzeughalter nach einem Einschrumpfen abzulegen, so erscheint eine Kennzeichnung "Gut"/"Schlecht" (anschaulich bezeichnet als eine sogenannte "Gutseite" und eine "Schlechtseite") oder (farblich) grün/rot für sinnvoll.

Die Handhabung der Förderbox wird so wesentlich erleichtert und effizient gestaltet.

Abschließend kann zur Erfindung festgestellt werden, dass sie sich mit allen ihren Aspekten insbesondere durch Einfachheit, Effizienz und Effektivität auszeichnet.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit der bzw. den Zeichnungen/Figuren näher erläutert werden (gleiche Bauteile/Komponenten und Funktionen weisen in den Zeichnungen/Figuren gleiche Bezugszeichen auf).

Die Ausführungsbeispiele dienen der Erläuterung der Erfindung und beschränken die Erfindung nicht auf darin angegebene Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:

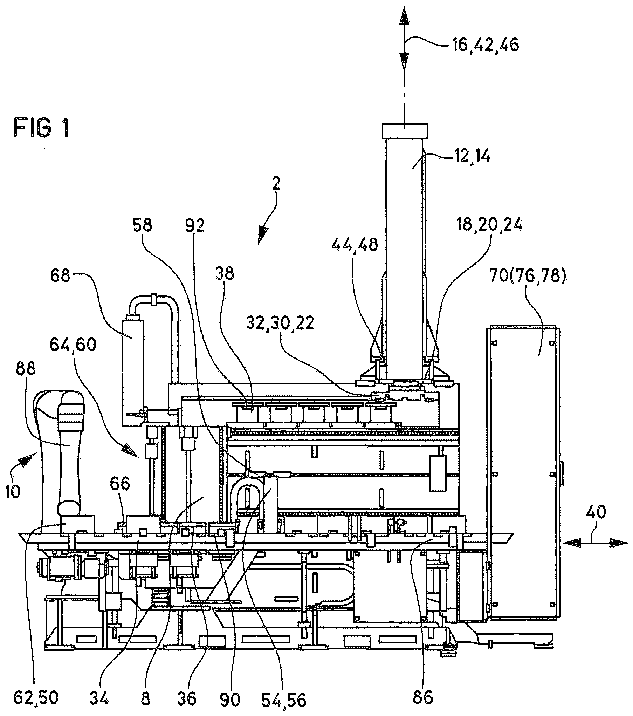

- FIG 1: eine Schrumpfvorrichtung zum automatisierten Ein- und Ausschrumpfen eines Werkzeugs in einen Werkzeughalter gemäß einer Ausführung in einer ersten Ansicht;

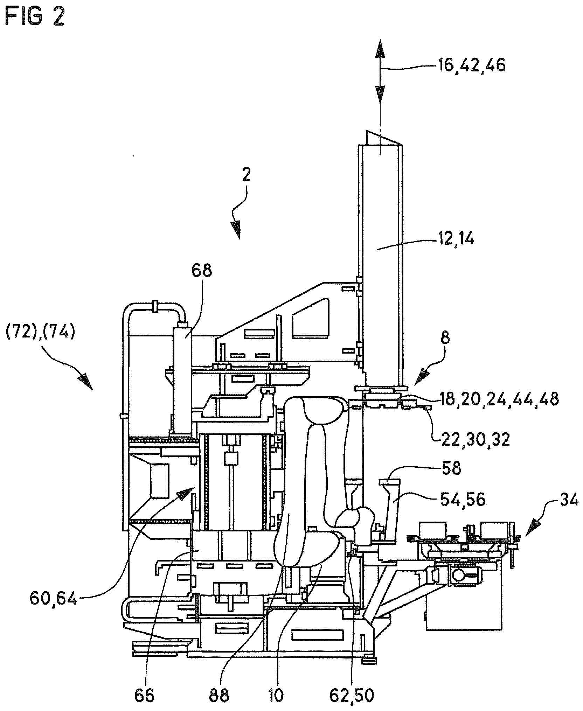

- FIG 2: die Schrumpfvorrichtung zum automatisierten Ein- und Ausschrumpfen eines Werkzeugs in einen Werkzeughalter gemäß der Ausführung in einer zweiten Ansicht;

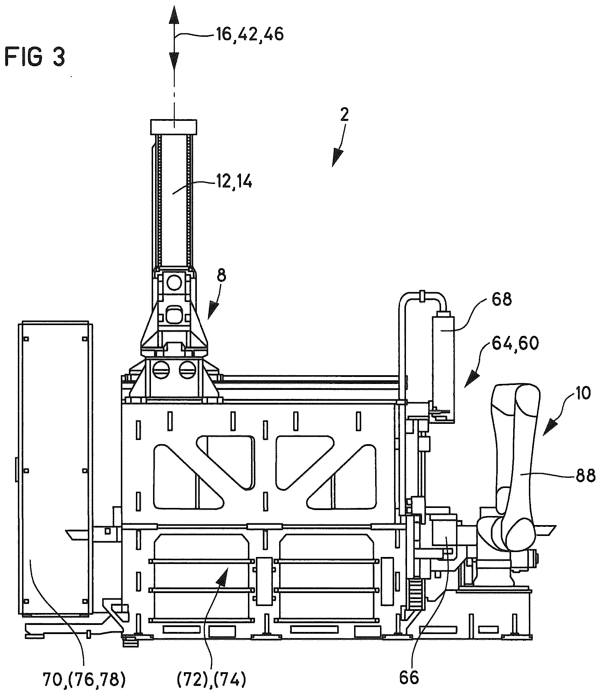

- FIG 3: die Schrumpfvorrichtung zum automatisierten Ein- und Ausschrumpfen eines Werkzeugs in einen Werkzeughalter gemäß der Ausführung in einer dritten Ansicht;
- FIG 4: die Schrumpfvorrichtung zum automatisierten Ein- und Ausschrumpfen eines Werkzeugs in einen Werkzeughalter gemäß der Ausführung in einer vierten Ansicht;

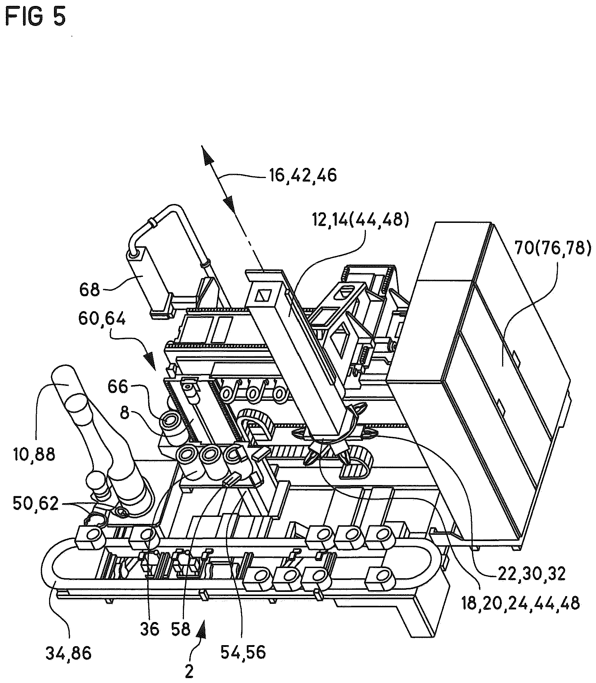

- FIG 5: die Schrumpfvorrichtung zum automatisierten Ein- und Ausschrumpfen eines Werkzeugs in einen Werkzeughalter gemäß der Ausführung in einer fünften Ansicht;

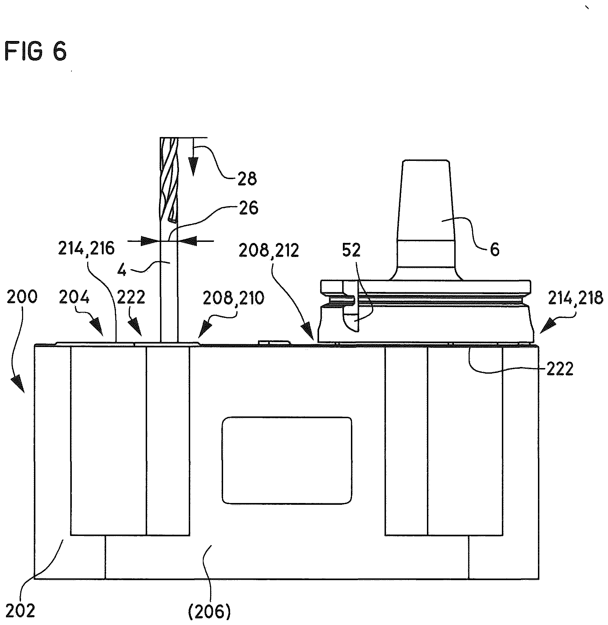

- FIG 6: die Förderbox zum Transport von Werkzeughalter und Werkzeugen gemäß der Ausführung in einer ersten Ansicht;

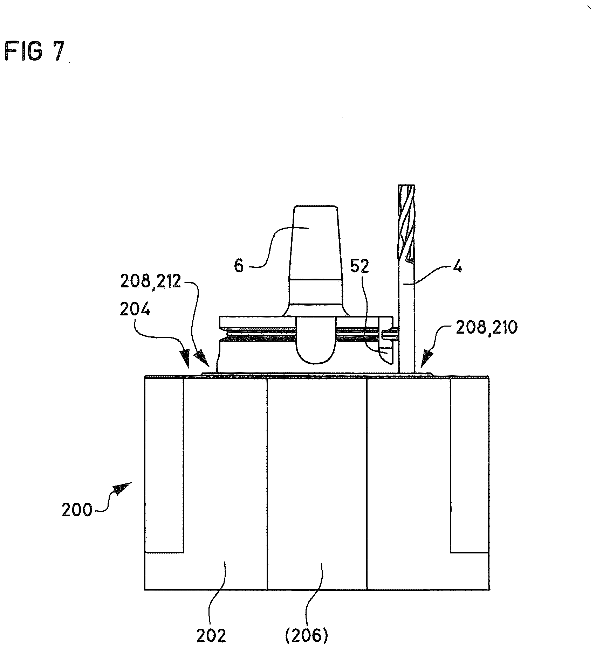

- FIG 7: die Förderbox zum Transport von Werkzeughalter und Werkzeugen gemäß der Ausführung in einer zweiten Ansicht;

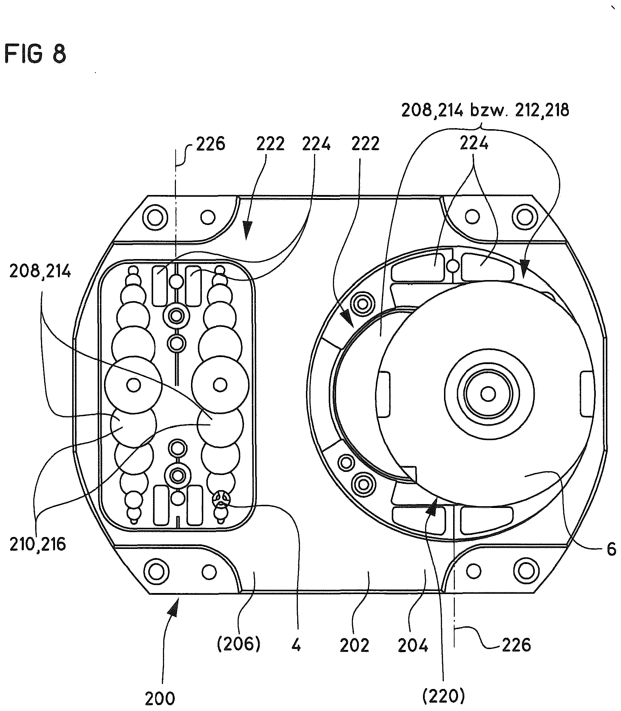

- FIG 8: eine Förderbox zum Transport von Werkzeughalter und Werkzeugen gemäß einer Ausführung in einer dritten Ansicht;

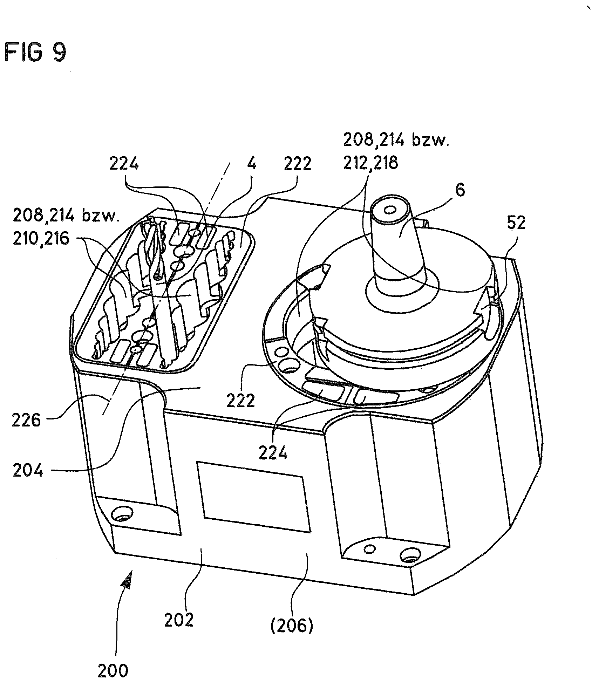

- FIG 9: die Förderbox zum Transport von Werkzeughalter und Werkzeugen gemäß der Ausführung in einer vierten Ansicht;
- FIG 10: einen Ausschnitt der Schrumpfvorrichtung zum automatisierten Ein- und Ausschrumpfen eines Werkzeugs in einen Werkzeughalter gemäß einer Ausführung bei ei- ner Überprüfung eines Werkzeughalters (mit oder ohne Werkzeug);
- FIG 11: einen Ausschnitt der Schrumpfvorrichtung zum automatisierten Ein- und Ausschrumpfen eines Werkzeugs in einen Werkzeughalter gemäß einer Ausführung bei einer Überprüfung eines Werkzeughalters (mit oder ohne Werkzeug);
- FIG 12: einen Ausschnitt der Schrumpfvorrichtung zum automatisierten Ein- und Ausschrumpfen eines Werkzeugs in einen Werkzeughalter gemäß einer Ausführung bei einer Überprüfung eines Werkzeugs (, welches eingeschrumpft werden soll);
- FIG 13: einen Ausschnitt der Schrumpfvorrichtung zum automatisierten Ein- und Ausschrumpfen eines Werkzeugs in einen Werkzeughalter gemäß einer Ausführung bei einer Überprüfung eines Werkzeugs (, welches eingeschrumpft werden soll);
- FIG 14: einen Ausschnitt der Schrumpfvorrichtung zum automatisierten Ein- und Ausschrumpfen eines Werkzeugs in einen Werkzeughalter gemäß einer Ausführung bei einer Überprüfung beim Einschrumpfen bzw. Ausschrumpfen;

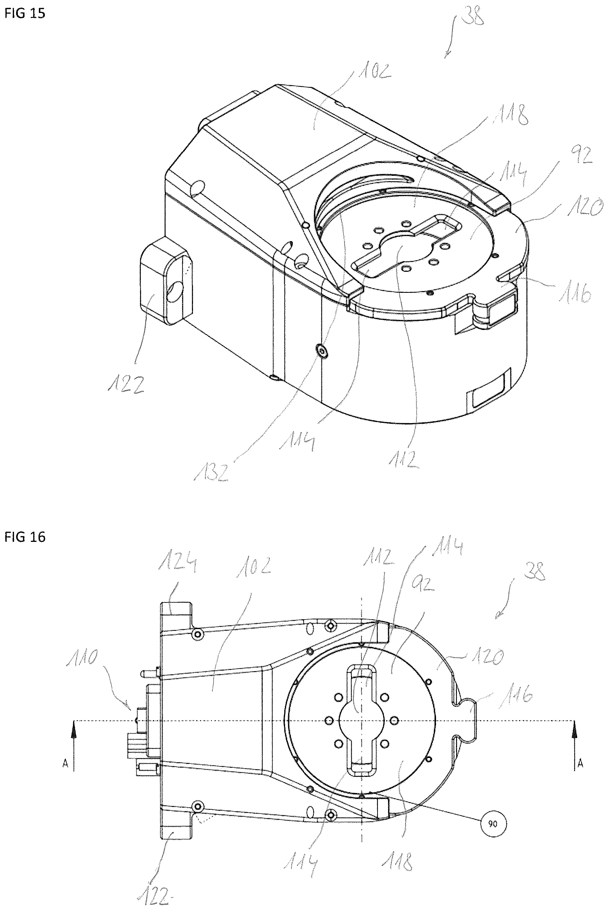

- FIG 15: eine Darstellung einer Induktionsspulenanordnung mit wechselbarer Anschlagscheibe bei der Schrumpfvorrichtung zum automatisierten Ein- und Ausschrumpfen gemäß einer Ausführung (perspektivisch);
- FIG 16: eine Darstellung einer Induktionsspulenanordnung mit wechselbarer Anschlagscheibe bei der Schrumpfvorrichtung zum automatisierten Ein- und Ausschrumpfen gemäß einer Ausführung (von oben);

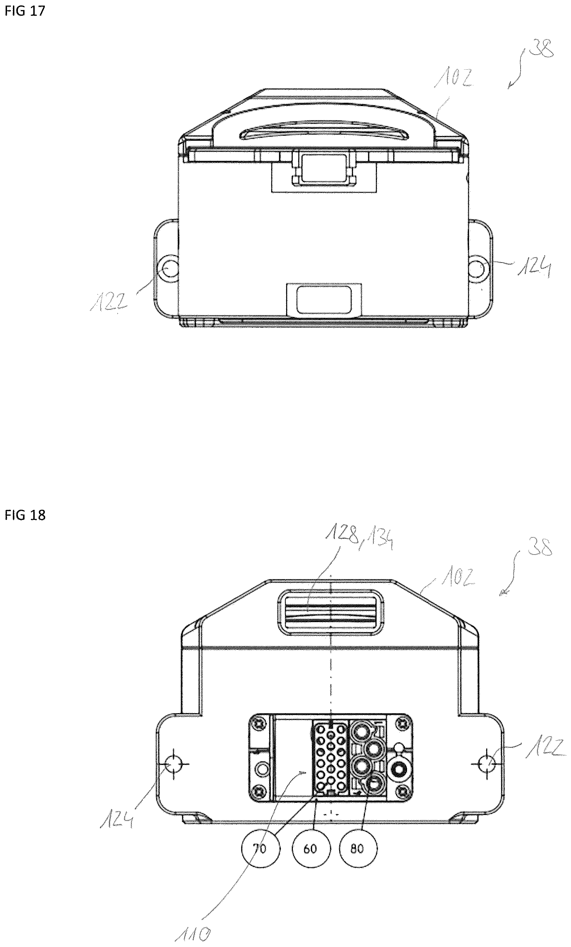

- FIG 17: eine Darstellung einer Induktionsspulenanordnung mit wechselbarer Anschlagscheibe bei der Schrumpfvorrichtung zum automatisierten Ein- und Ausschrumpfen gemäß einer Ausführung (von vorne);
- FIG 18: eine Darstellung einer Induktionsspulenanordnung mit wechselbarer Anschlagscheibe bei der Schrumpfvorrichtung zum automatisierten Ein- und Ausschrumpfen gemäß einer Ausführung (von hinten);

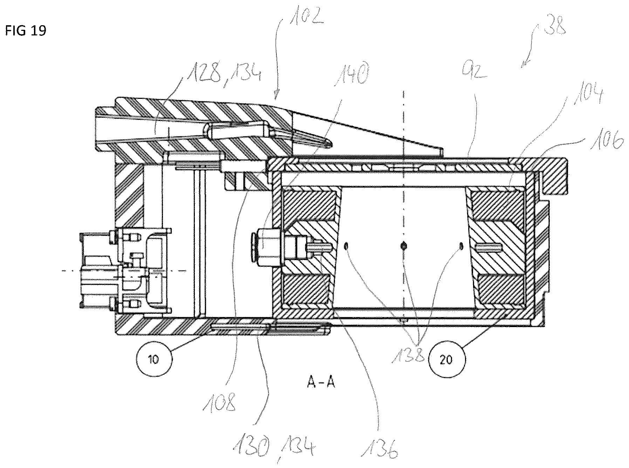

- FIG 19: eine Darstellung einer Induktionsspulenanordnung mit wechselbarer Anschlagscheibe bei der Schrumpfvorrichtung zum automatisierten Ein- und Ausschrumpfen gemäß einer Ausführung (im Schnitt);
- FIG 20: eine Schrumpfvorrichtung zum automatisierten Ein- und Ausschrumpfen eines Werkzeugs in einen Werkzeughalter mit einer Ultraschallreinigungsanlage (für Werkzeuge und/oder Werkzeughalter) gemäß einer Ausführung in einer Ansicht.

- **Automatisierte Schrumpfzelle 2 bzw. Schrumpfvorrichtung 2 zum automatisierten Ein- und Ausschrumpfen eines Werkzeugs in einen Werkzeughalter (FIGen 1 bis 5 und FIGen 10 bis 14)**

FIGen 1 bis 5 zeigen - in verschiedenen Ansichten und Details - eine Schrumpfvorrichtung 2 zum automatisierten Ein- und Ausschrumpfen eines Werkzeugs 4 in einen Werkzeughalter 6 - kurz als automatisierte Schrumpfzelle 2 bzw. nur Schrumpfzelle 2 bezeichnet. FIGen 10 bis 14 zeigen - in Ausschnitten - Überprüfungen des Werkzeugs 4 bzw. des Werkzeughalters 6 in der Schrumpfvorrichtung 2.

### (A) Die Anlage/die Schrumpfzelle 2

Wie die FIGen 1 bis 5 zeigen, sieht die - kompakt bauende - Schrumpfzelle 2 als wesentliche Komponenten, ein Förderband 34, einen mehrachsigen Industrieroboter/Greiferarm 10, eine Zentrierstation 54, ein (induktives) Schrumpfgerät 8, eine Kühlstation 64 sowie Schaltschränke 70 und einen Steuerrechner 76 und auch eine Sicherheitsabschirmung 80 vor - , welche in der (in den FIGen 1 bis 5) dargestellten Form kompakt bauend angeordnet sind - und funktionell in einem integrativen Gesamtprozess einer Bestückung eines Werkzeughalters 6 mit Werkzeugen 4 (im Rahmen einer automatisierten industriellen Fertigung) zusammenwirken.

### Fördereinrichtung 34

Funktionell die Anlage bzw. die Schrumpfzelle 2 "eröffnender Bestandteil bzw. Komponente" ist eine Fördereinrichtung 34, welche, wie die FIGen 1 bis 5 erkennen lassen, als ein umlaufendes, segmentiertes, Förderband 34 ausgebildet ist.

Die einzelnen Segmente 86 des Förderbandes 34 sind dabei wiederum derart ausgebildet, dass sie jeweils mit einer Förderbox 200 (, welche ihrerseits wiederum mit Werkzeugen 4 und Werkzeughalter 6 bestückt werden kann) (s. nachfolgen zu FIGen 6 bis 9) bestückt werden kann.

### mehrachsiger Industrieroboter/Greiferarm 10

Weiterhin sieht, wie den FIGen 1 bis 5 entnehmbar ist, die Schrumpfzelle 2 einen Mehrachsen-Gelenkarmroboter 10 vor (erste mehrachsige Handhabungsvorrichtung 10), welcher seitlich dem Förderband 34 positioniert ist.

Der Gelenk-/Greiferarm 88 dieses Mehrachsen-Gelenkarmroboter 10 ist mit einem Doppelgreifer 62 ausgebildet - für ein Greifen eines Werkzeugs 4 (erster Greifer) einerseits und für ein Greifen eines Werkzeughalters 6 (zweiter Greifer) anderseits.

Die Position (s. FIGen 1 bis 5) des Mehrachsen-Gelenkarmroboters 10 sowie dessen Armgeometrie ist derart vorgesehen, dass die wesentlichen Bereiche der Schrumpfzelle 2 durch den Mehrachsen-Gelenkarmroboter 10 bzw. dessen Doppelgreifer 62 erreichbar sind.

### (induktives) Schrumpfgerät 8 mit Greiferturm 12

Das Schrumpfgerät 8, welches (geometrisch, wie auch funktionell) zentralen Bestandteil der Schrumpfzelle 2 bildet, weist, wie die FIGen 1 bis 5, zeigen verschiedene nebeneinander angeordnete (Spann-)Spindeln 36, kurz nur Spindeln 36, auf, mittels welchen Werkzeughalter 6 während des Schrumpfens gespannt in Position gehalten werden können. Die Spindeln 36 sind dabei auch um eine vertikale Achse - hier im Folgenden als Z-Achse 16 bezeichnet - rotierbar.

Die Spindeln 36 ihrerseits sind auf einem horizontal 40 sowie vertikal 42 (Z-Achse 16) verfahrbaren Stelltisch 90 angeordnet, wodurch sie in den genannten Richtungen verfahr- bzw. anhebbar werden.

Im Bereich des Doppelgreifers 62 ist bei der ersten Handhabungsvorrichtung 10 ferner eine Leseeinrichtung 50, in diesem Fall eine optische Leseeinrichtung 50, angeordnet, mittels welcher Markierungen 52 (vgl. FIGen 6, 7 und 9), wie insbesondere Werkzeughaltercodes 52, welche an einem Werkzeughalter 6 angebracht sein können, gelesen werden können -, insbesondere, wenn ein in einer der Spindeln 36 eingespannter Werkzeughalter 8, mittels der ihn spannenden Spindel 36 rotiert wird.

Weiterhin sieht das Schrumpfgerät 8 mehrere, ebenfalls nebeneinander angeordnete Induktionsspulenanordnungen 38 vor, welche in vorgegebenen vertikalen 42 Abstand (Z-Achsen 16 - Abstand) oberhalb der Spindeln 36 angeordnet sind - und welche auch bezüglich der genannten Z-Achse 16 ausgerichtet sind. Die Induktionsspulenanordnungen 38 weisen - soweit hier von Bedeutung - auch die üblichen Anschlagscheiben 92 (Konzentratoren/Ferrit-Scheiben) auf.

Wenn auch, wie hier dargestellt, die Induktionsspulenanordnungen 38 in fester Höhe angeordnet sind, so kann auch vorgesehen sein, diese vertikal - längs der der Z-Achse 16 - verschiebbar anzuordnen.

Die Verfahrbarkeit des die Spindeln 36 tragenden Stelltisches 90 ist derart gestaltet, dass - einerseits jede der Spindeln 36 in Verlängerung der Z-Achse 16 unterhalb einer jeden Induktionsspulenanordnung 38 verfahrbar ist - sowie andererseits jede Spindel 36 längs der Z-Achse 16 bis an jede Induktionsspulenanordnung 38 anhebbar ist.

Ferner sind hier auch Mittel 44, 48 vorgesehen, mittels welchen der vertikale 42 Anhebeweg 46 der Spindeln 36 sowie eine Kollision mit den Induktionsspulenanordnungen 38, insbesondere mit den Anschlagscheiben 92 der Induktionsspulenanordnung 38 überwachbar ist.

Darüber hinaus sind bei dem Schrumpfgerät 2 die erwähnten mehreren Spindeln 36 und Induktionsspulenanordnungen 38 verbaut - in diesem gezeigten Fall drei Spindeln 36 und fünf Induktionsspulenanordnungen 38, um so auch, weisen diese Mehrzahl von Spindeln 36 und Induktionsspulenanordnungen 38 unterschiedliche geometrische Abmessungen auf, eine Gesamtpalette von Werkzeugen 4 und Werkzeughalter 8 schrumpfen zu können.

Weiterhin sieht, wie die FIGen 1 bis 5 erkennen lassen, das Schrumpfgerät 2 eine - mittels eines linearen Antriebs 14 längs der Z-Achse 16 - automatisch verfahrbare Handhabungsvorrichtung 12 (zweite, automatisch verfahrbare Handhabungsvorrichtung 12) - hier kurz im Folgenden nur Greiferturm 12 genannt - vor.

Der Greiferturm 12 ist - ungeachtet seiner linearen Verfahrbarkeit längs der Z-Achse 16 und unabhängig davon - auch selbst - in vorgebbaren Umfang - automatisch horizontal 40 verfahrbar.

Der Greiferturm 12 sieht, wie die FIGen 1 bis 5 zeigen, einen um die Z-Achse 16 drehbaren Greiferkopf 18 vor. Die Drehposition des Greiferkopfes 18 kann mittels einer Winkelmessvorrichtung 20 bestimmt und somit dessen Positionierung überwacht werden.

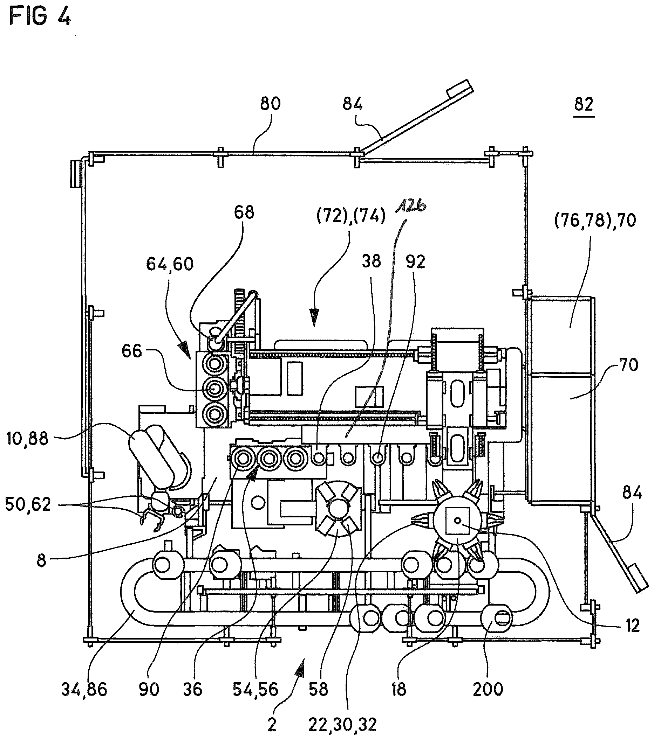

Der Greiferkopf 18 seinerseits weist mehrere Greifervorrichtungen 22 (Zangengreifer 22) zum Greifen von Werkzeugen 4 auf. Wie insbesondere FIG 4 erkennen lässt, sind die mehreren Greifervorrichtungen 22, in diesem Fall sechs, gleichverteilt um die Z-Achse 16 am Greiferkopf 18 angeordnet.

Darüber hinaus ist der Greiferkopf 18 mit Kraftmesseinrichtungen 24 ausgestattet, unter Verwendung derer eine Zug- und/oder Schubkraft des Greiferkopfes 18 bzw. der Greifervorrichtung 22 auf ein Werkzeug 4 messbar ist, um so ein Einführen eines Werkzeugs 4 in einen Werkzeughalter 6 bzw. ein Ausziehen eines Werkzeugs 4 aus einem Werkzeughalter 6 überwachen zu können (hier verfährt der Greiferturm 12 bzw. der Greiferkopf 18 längs der Z-Achse 16).

Weiterhin ist eine solche (bzw. jede) Greifervorrichtung 22 mit zwei beim Greifvorgang relativ zueinander bewegbaren, elektromotorisch verfahrbaren, Greiferbacken 30 ausgestattet. Die elektromotorische Verstellung der Greiferbacken 30 ermöglicht dabei, dass ein Greifvorgang, insbesondere hinsichtlich einer Greifkraft, mess- und überwachbar ist.

Jede Greiferbacke 30 sieht eine Anschlagnase 32 vor, welche als Anlageelement bei einer Positionierung (längs der Z-Achse 16) dienen kann. Die Greiferbacken 30 ihrerseits sind auch auswechselbar - und positionsgenau klemmbar bei der Greifvorrichtung 22 angeordnet.

Um eine gesamte Palette verschieden dimensionierter Werkzeuge 4 greifen zu können, sind die Greifervorrichtungen 22 an Werkzeugen 4 vorgebbaren Durchmesser 26 angepasst.

### Zentrierstation 54 mit Ausrichtungskontrolle bzw. Ausrichtungskontrolleinrichtung 58 (Messlaser 58)

Wie auch die FIGen 1 bis 5 zeigen, sieht die Schrumpfzelle 2 eine - im Bereich zwischen der Fördereinrichtung 34 und dem Schrumpfgerät 8 angeordnete - Zentrierstation 54 - zu einem Spannen und (Aus-)Richten eines Werkzeuges 4 - vor.

Die Zentrierstation 54 weist - in diesem hier gezeigten Fall - drei symmetrisch angeordnete Spannbacken 56 auf, mittels welchen ein Werkzeug 4 zentriert (und) gespannt gehalten werden kann.

Darüber hinaus ist an der Zentrierstation 54 - oberhalb der Spannbacken 56 - eine Ausrichtungskontrolleinrichtung 58, beispielsweise in Form eines laserbasierten Messsystems 58 (Messlasers), vorgesehen, unter Verwendung deren eine Ausrichtung insbesondere in Bezug auf die Z-Achse 16) eines, aus der Zentrierstation 54 mittels des Greiferturms 12 entnommenen, Werkzeugs 4 bestimmbar und überwachbar ist.

Mittels dieser Ausrichtungskontrolleinrichtung 58 bzw. des laserbasierten Messsystems 58 soll es auch möglich sein, die Geometrie eines Werkzeugs 4 zu vermessen.

### Kühlstation 64

Links seitlich neben dem Schrumpfgerät 8 befindet sich bei der Schrumpfzelle 2 eine Kühlstation 64 zur Kühlung durch das Schrumpfen erwärmter, Werkzeughalter 6, wie sie im Wesentlichen in der Offenlegungsschrift zur Anmeldung mit dem amtl. Aktenzeichen DE 10 2022 114 046.6 beschrieben sein wird.

Die Kühlstation 64 - wie hier gemäß den FIGen 1 bis 5 verbaut - weist - ähnlich dem Schrumpfgerät 8 - mehrere nebeneinander angeordnete (Spann-)Spindeln 66, kurz auch nur Spindeln 66, auf, hier in diesem Fall drei Spindeln 66, unter Verwendung deren Werkzeughalter 6 beim Kühlen gespannt gehalten (und gegebenenfalls bei Bedarf rotiert) werden können.

Darüber hinaus sieht die Kühlstation 64 einen Kühlaufsatz 68 vor, welcher über an den Spindeln 66 gehaltene Werkzeughalter 6 überstülpbar ist und welcher eingerichtet ist zur Erzeugung einer Wirbelstromkühlung (Zyklonkühlung).

Ein solcher Kühlaufsatz 68 ist beispielsweise in der erwähnten Offenlegungsschrift zur Anmeldung mit dem amtl. Aktenzeichen DE 10 2022 114 046.6 beschrieben.

### Wuchtvorrichtung 72 und Voreinstelleinrichtung 74

Im Rücken des Schrumpfgerätes 8 können weiter dann auch noch eine Wuchtvorrichtung 72 sowie gegebenenfalls auch eine Voreinstelleinrichtung 74 angeordnet sein (nicht dargestellt).

Die Wuchtvorrichtung 72 und die Voreinstelleinrichtung 74 können der Einfachheit halber wie üblich (aus dem Stand der Technik bekannt) ausgebildet sein.

Hierdurch wäre es möglich "frisch geschrumpfte" Werkzeughalter 6 (auch "gleich") zu wuchten und zu vermessen.

### Schaltschränke 70 und Steuerrechner 76

Rechts seitlich neben dem Schrumpfgerät 8 befindet sich bei der Schrumpfzelle 2, wie FIGen 1 bis 5 zeigen, Schaltschränke 70 und ein Steuerrechner 76 (mit Bildschirm, Eingabemittel und Drucker) (nicht sichtbar), in welchem die (Steuer-)Elektronik/-elektrik (soweit nicht unmittelbar in den Bestandteilen/Komponenten verbaut) bzw. die Steuerung 78 (Software 78) für die Schrumpfzelle 2 aufgenommenen bzw. gespeichert sind.

Über den Steuerrechner 76 kann die Schrumpfzelle 2 bedient bzw. gesteuert werden.

### Sicherheitsabschirmung 80/Sicherheitszaun 80

Zum Schutz der Schrumpfzelle 2 sieht diese eine Sicherheitsabschirmung 80 - hier in Form eines Sicherheitszaunes 80, vor, mittels welcher weite Bereiche der Schrumpfzelle 2 gegenüber einer Umgebung 82 um die Schrumpfzelle 2 (herum) abschirmbar sind.

Wie insbesondere FIG 4 zeigt, weist diese Sicherheitsabschirmung 80 bzw. dieser Sicherheitszaun 80 zwei (gegebenenfalls automatisch ver-/entriegelbare) Türen 84 auf, durch welche Bereiche an der Schrumpfzelle 2 betretbar werden.

Auch lässt die Sicherheitsabschirmung 80 bzw. der Sicherheitszaun 80 einen "mittleren" Bereich des Förderbandes 34 unabgeschirmt, so dass hier eine Bestückung des Förderbandes 34 (manuell, wie auch automatisiert), beispielsweise mit den Förderboxen 200 (s. nachfolgend), möglich ist.

Alle Komponenten der Schrumpfzelle 2 sind untereinander mittels einer (nicht näher dargestellten) Verkabelung verbunden, sodass Daten, wie beispielsweise Steuerbefehle wie auch Geometriedaten (von Werkzeugen 4 und Werkzeughaltern 6) dorthin übertragen werden können bzw. dort vorliegen können.

### (B) Der Prozess

Beim automatisierten Ein- bzw. Ausschrumpfen von Werkzeugen 4 in Werkzeughaltern 6 in vorbeschriebener Schrumpfzelle 2 läuft nach Folgendem Prozess ab:
(a) Bestückung einer auf der Fördereinrichtung 34 angeordneten Förderbox 200 mit einem (einzuschrumpfenden) Werkzeug 4 und einem Werkzeughalter 6 mit einem (auszuschrumpfenden) Werkzeug 4,
(b) Transport der mit dem (einzuschrumpfenden) Werkzeug 4 und dem Werkzeughalter 6 mit dem (auszuschrumpfenden) Werkzeug 4 bestückten Förderbox 200 mittels der Fördereinrichtung 34 zu dem Schrumpfgerät 8 bzw. dort in eine Nähe einer der (Spann-)Spindeln 36 des Schrumpfgeräts 8,
(c) Versetzen des Werkzeughalter 6 mit dem (auszuschrumpfenden) Werkzeug 4 (kurz im Folgenden der Einfachheit halber immer nur Werkzeughalter 6) von der Förderbox 200 auf die bzw. eine der Spindeln 36 des Schrumpfgeräts 8 unter Verwendung des Mehrachsen-Gelenkarmroboters 10,
(d) Spannen des Werkzeughalters 6 auf der Spindel 36 des Schrumpfgeräts 8,
(e) Rotieren des auf der Spindel 36 des Schrumpfgerätes 8 gespannten Werkzeughalters 6 um die Z-achse 16 und Lesen einer auf dem Werkzeughalter 6 angebrachten Markierung 52 bzw. Werkzeughaltercodes 52 mittels der Leseeinrichtung 50,
(f) Bereitstellen von Werkzeughalter-, Werkzeug- und Schrumpfdaten bzw. -parameter, insbesondere unter Verwendung der auf dem Werkzeughalter 6 angebrachten und gelesenen Markierung 52 bzw. Werkzeughaltercodes 52,
(g) Versetzen des (einzuschrumpfenden) Werkzeuges 4 von der Förderbox 200 in die Zentrierstation 54 mittels des Mehrachsen-Gelenkarmroboters 10,
(h) Spannen und Ausrichten des (einzuschrumpfenden) Werkzeugs 4 in der Zentrierstation 54,
(i) Greifen des in der Zentrierstation 54 gespannten (einzuschrumpfenden) Werkzeugs 4 mittels des Greiferturms 12 bzw. dortiger Greifervorrichtung 22 (Zangengreifers 22) derart, dass das (einzuschrumpfende) Werkzeug 4 nach dem Einschrumpfen in den Werkzeughalter 6 eine vorgebbare Position in dem Werkzeughalter 6 aufweist,
(j) Vermessen des durch den Greiferturm 12 gegriffenen (einzuschrumpfenden) Werkzeugs 4 mittels des Messsystems 58 und Vermessen der Ausrichtung des (einzuschrumpfenden) Werkzeugs 4 hinsichtlich der Z-Achse 16 - sowie auch gegebenenfalls dessen Geometrie (beispielsweise Länge),
(k) Verfahren des auf der Spindel 36 des Schrumpfgerätes 8 gespannten Werkzeughalters 6 - bis in Verlängerung der Z-Achse 16 unterhalb der (für das aktuelle Schrumpfen vorgesehenen) Induktionsspulenanordnung 38 des Schrumpfgeräts 8,
(l) Ermitteln des Anhebewegs 46 des auf der Spindel 36 des Schrumpfgerätes 8 gespannten Werkzeughalters 6 längs der Z-Achse 16 - gegebenenfalls auch unter Verwendung der Geometrie des Werkzeughalters 6,
(m) Anheben des auf der Spindel 36 des Schrumpfgerätes 8 gespannten Werkzeughalters 6 längs der Z-Achse 16 bis der Werkzeughalter 6 an der Anschlagscheibe 92 der Induktionsspulenanordnung 38 anschlägt,
(n) (dabei) Überwachung des Anhebevorgangs 46 des auf der Spindel 36 des Schrumpfgerätes 8 gespannten Werkzeughalters 6 hinsichtlich des Anhebewegs 46 (vgl. Hebewegüberwachungseinrichtung 44) und einer Kollision mit der Induktionsspulenanordnung 38 bzw. mit Anschlagscheiben 92 der Induktionsspulenanordnung 38 (vgl. Kollisionsüberwachungsvorrichtung 48),
   (Ausschrumpfen des "alten/verbrauchten" Werkzeugs 4 aus dem Werkzeughalter 6 und Einschrumpfen eines neuen Werkzeugs 4 in den Werkzeughalter 6)
(o) Erwärmen des Werkzeughalters 6 unter Verwendung der Induktionsspulenanordnung 38 des Schrumpfgeräts 8,
(p) Greifen des in dem Werkzeughalter 6 angeordneten (auszuschrumpfenden) Werkzeugs 4 durch den Greiferturm 12 bzw. Greifervorrichtung 22 (Zangengreifer 22) und Verfahren des durch den Greiferturm 12 bzw. dessen Greifervorrichtung/Zangengreifer 22 gegriffenen (auszuschrumpfenden) Werkzeugs 4 längs der Z-Achse 16 aus dem Werkzeughalter 6 - mit Überwachung des Verfahrens des gegriffenen Werkzeugs 4 hinsichtlich einer Zugkraft auf das (auszuschrumpfende) Werkzeug (vgl. Kraftmesseinrichtung 24),
(q) Schwenken bzw. Drehen/Rotieren des Greiferkopfes des Greiferturms (vgl. Winkelmessvorrichtung 20);
(r) Verfahren (Einsetzen) des durch den Greiferturm 12 gegriffenen (einzuschrumpfenden) Werkzeugs 4 entlang der Z-Achse 16 relativ zu dem Werkzeughalter 6 in eine vorgebbare Schrumpfposition bezüglich des Werkzeughalters 6 solange bis die Anschlagnasen 32 der Greifervorrichtung 22 des Greiferkopfes 18 auf die obere Stirnseite des Werkzeughalters 6 (oder auf die Anschlagscheibe 92 der Induktionsspulenanordnung 38) aufliegen, mit Überwachung des Verfahrens des gegriffenen Werkzeugs 4 hinsichtlich einer Schubkraft auf das (einzuschrumpfende) Werkzeug (vgl. Kraftmesseinrichtung 24)
(s) kurzzeitiges Halten des (in den Werkzeughalter 6 einzuschrumpfenden) Werkzeugs 4 mittels des Greiferturms 12 zumindest solange bis durch Abkühlen des Werkzeughalters 6 das (einzuschrumpfende) Werkzeug 4 gespannt wird,
(t) Absenken des auf der Spindel 36 des Schrumpfgerätes 8 gespannten (, das gerade neu eingeschrumpfte Werkzeug 4 spannenden) Werkzeughalters 6 längs der Z-Achse 16,
(u) Versetzen des auf der Spindel 36 des Schrumpfgerätes 8 gespannten (, das gerade neu eingeschrumpfte Werkzeug 4 spannenden) Werkzeughalters 6 unter Verwendung des Mehrachsen-Gelenkarmroboters 10 in die Kühlstation 64 - und Spannen des Werkzeughalters 6 dort auf einer der Spindeln 66,
(v) Kühlen des (das gerade neu eingeschrumpfte Werkzeug 4 spannenden) Werkzeughalters 6 unter Verwendung der Wirbelstromkühlung (Zyklonkühlung) des Kühlaufsatzes 68,
(w) Vermessen des (das gerade neu eingeschrumpfte Werkzeug 4 spannenden) Werkzeughalters 6 in der Kühlstation (vgl. Messlaser 60),
(x) Verfahren des (gerade ausgeschrumpften) Werkzeugs 4 mittels des Greiferturms 12 zu der Förderbox 200 und Bestücken der Förderbox 200 mit diesem oder Verfahren des (gerade ausgeschrumpften) Werkzeugs 4 mittels des Greiferturms 12 zu der Zentrierstation 54 (und ggfl. Versetzen des Werkzeugs 4 von dort aus in die Förderbox 200),
(y) Versetzen des (gekühlten) Werkzeughalters 6 in die Förderbox 200 mittels des Mehrachsen-Gelenkarmroboters 10,
(z) Abtransportieren der bestückten Förderbox 200 mittels dem Förderband 34.

### - Überprüfungen des Werkzeugs 4 bzw. des Werkzeughalters 6 in der Schrumpfvorrichtung 2 (FIGen 10 bis 14)

Für diese Überprüfungen sieht die Schrumpfvorrichtung 2, wie die FIGen 10 bis 14 zeigen, ein hochgenaues Messsystem 94, hier ein Durchlichtmesssystem 94, vor, welches längs der Z-Achse sowie auch quer dazu in der Schrumpfvorrichtung 2 verfahrbar ist.

Weiterhin weist die Schrumpfvorrichtung, wie die FIGen 12 bis 13 zeigen, - neben den vorbeschriebenen Spindeln 36 - ein drehbares Backenfutter 96 auf, welches (ebenfalls) vorgesehen ist, um Werkzeuge (hier bei deren Überprüfung) zu spannen (vgl. FIGen 12 und 13) - und welches Backenfutter 96 ebenfalls quer zur Z-Achse verfahrbar ist.

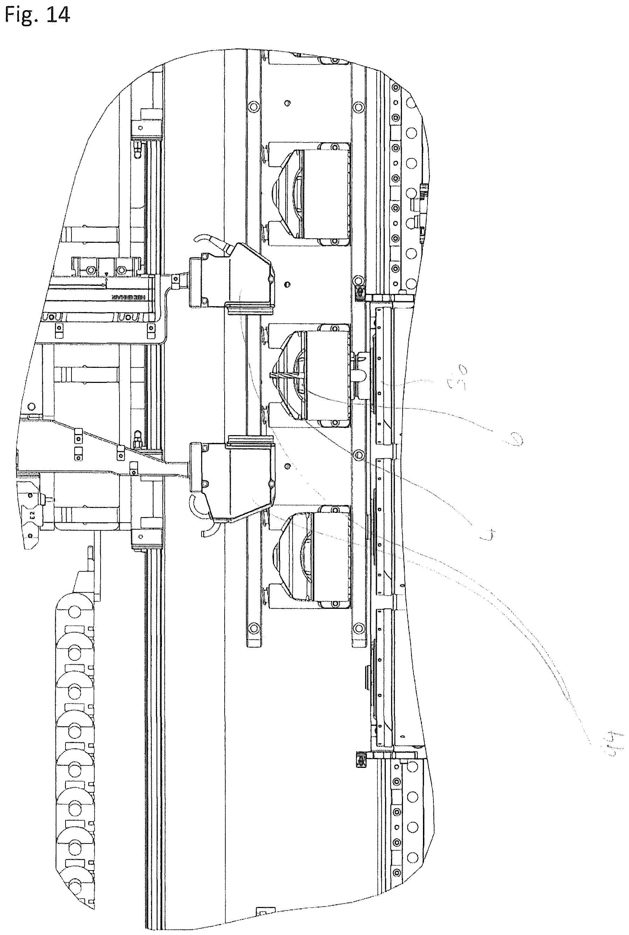

Durch das Messsystem 94 werden drei wichtige Überprüfungen/Validierungen an der Werkzeugaufnahme 6 bzw. am Werkzeug 4 durchgeführt:
(1) Überprüfung und Validierung eines Werkzeughalters 6 (mit oder ohne Werkzeuge 4, in welches das Werkzeug 4 eingeschrumpft werden soll) (FIGen 10 und 11),
(2) Überprüfung und Validierung eines Werkzeugs 4, welches eingeschrumpft werden soll (FIGen 12 und 13),
(3) Überprüfung und (simultane) Korrektur beim Einschrumpfen sowie beim Ausschrumpfen des Werkzeugs 4 (FIG 14) .

Durch die Integration des Messsystems 94 in die Schrumpfvorrichtung und in den automatisierten Werkzeugwechsel bei der Schrumpfvorrichtung 2 kann die Prozess- und Ablaufsicherheit sowie die Genauigkeit beim Werkzeugwechsel maximiert werden.

### (1) Überprüfung und Validierung eines Werkzeughalters 6 (mit oder ohne Werkzeug 4) (FIGen 10 und 11)

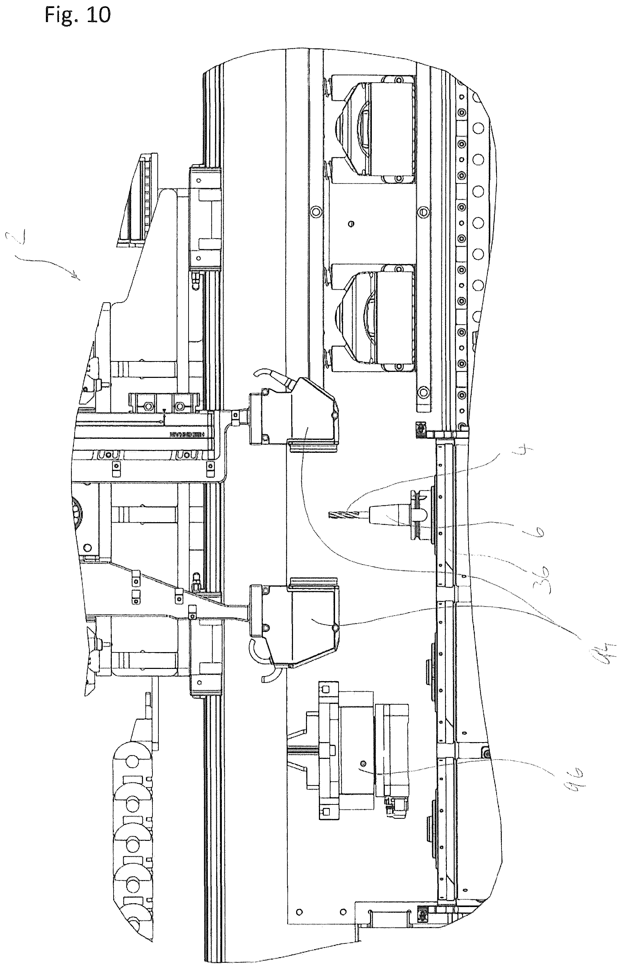

FIG 10 zeigt einen Ausschnitt der Schrumpfvorrichtung 2 bei der Überprüfung eines Werkzeughalters 6 (mit oder ohne Werkzeug 4 - hier dargestellt mit Werkzeug 4) (in einer ersten (oberen) Messposition).

Hierbei befindet sich, nach FIG 10, die Messvorrichtung 94 derart - oberhalb - positioniert zum Werkzeughalter 6 (mit eingespannten, auszuschrumpfenden Werkzeug 4), welcher Werkzeughalter 6 in der Spindel 36 gehalten wird, dass zumindest der höchste Punkt des Werkzeugs 4 in den Messbereich des Messsystems 94 hineinragt.

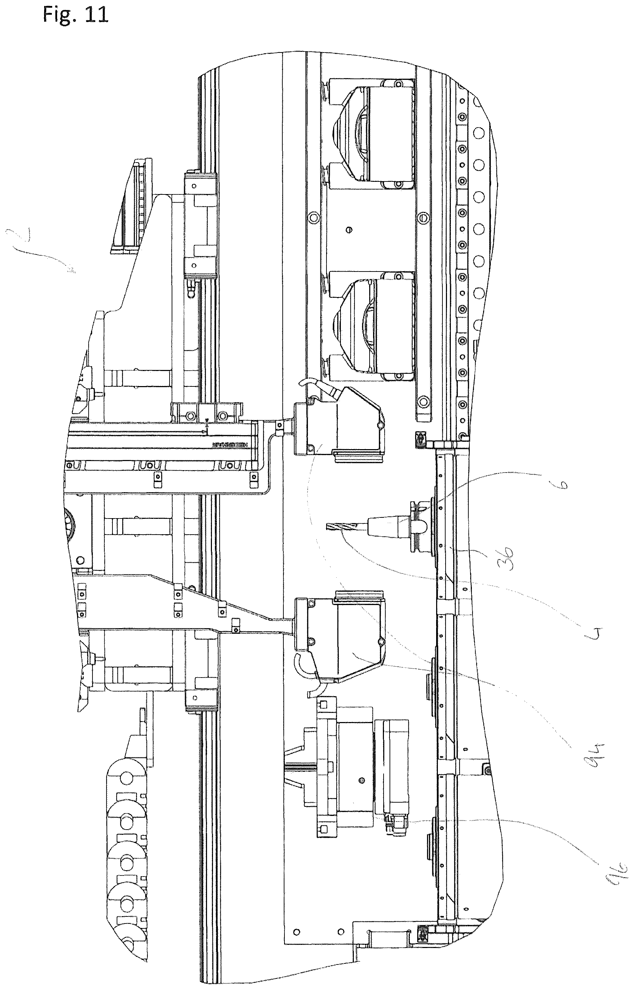

Während der Überprüfung wird nun das Messsystem 94 entlang der Z-Achse vertikal nach unten verfahren (siehe FIG 11 - zweite (mittlere) Messposition), sodass der Messbereich des Messsystems 94 den Werkzeughalter 6 (mit Werkzeug 4) von oben nach unten überstreicht - und so der Werkzeughalter 6 (mit eingespanntem Werkzeug 4) in Gänze vermessen (abgescannt) wird - und anschließend validiert werden kann.

Hierbei wird der Werkzeughalter 4 (mit Werkzeug 4) u.A. vermessen bzw. geprüft auf:
- Gesamtlänge (von Werkzeughalter mit Werkzeug) i.O bzw. in Toleranz
- Schneidendurchmesser
- Zustand der Schneiden
- Sauberkeit, (anhaftende) Verschmutzung, z. B. Späne
- Beschichtungen (Farbe) und/oder Oberflächenzustände
- Zustände von ggfl. mehrteiligen Werkzeugen, z.B. korrekter Sitz von Wendeplatten
- Scheid- und Greifbereich
- Zylindrizität des Greif- bzw. Schaftbereichs (h6 Toleranz)
- Werkzeughalter - Länge A-Maß i.O
- Einstecktiefe des Werkzeugs 4 im Werkzeughalter 6 (in Verbindung mit einer Information über die Gesamtlänge des Werkzeuges)
- Auskraglänge
- Schaftlänge
- bei Werkzeugaufnehmen mit Schraubspannung (Weldon, Hydrodehn, ...) Ermittlung der Schlüsselweite
- Kollisionen (Kollisionsprüfung z.B. Greifer, Schrumpfspule)
- richtiger Werkzeughalter 6/richtiges Werkzeug 4
- Greifbereich i.O.

Anhand der Messung kann dann der Werkzeughalter 6 (mit Werkzeug 4) validiert werden.

Befindet sich ein Werkzeughalter 6 - ohne eingespanntem Werkzeug 4 - bei der Überprüfung, kann auch solches (d.h., das Fehlen des Werkzeugs 4) bei der Messung detektiert und/oder erkannt werden.

### (2) Überprüfung und Validierung eines Werkzeugs 4 (, welches eingeschrumpft werden soll) (FIGen 12 und 13)

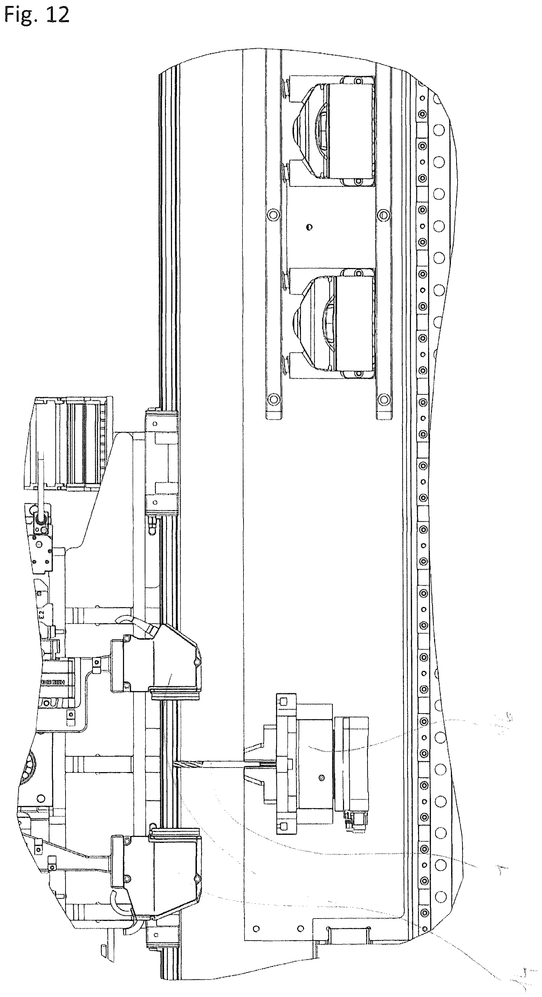

FIG 12 zeigt einen Ausschnitt der Schrumpfvorrichtung 2 bei der Überprüfung und Validierung des Werkzeugs 4 (, welches eingeschrumpft werden soll) (in einer ersten (oberen) Messposition) .

Hierbei befindet sich, nach FIG 12, die Messvorrichtung 94 derart - oberhalb - positioniert zum Werkzeug 4, dass zumindest der höchste Punkt des Werkzeugs 4 in den Messbereich des Messsystems 94 hineinragt.

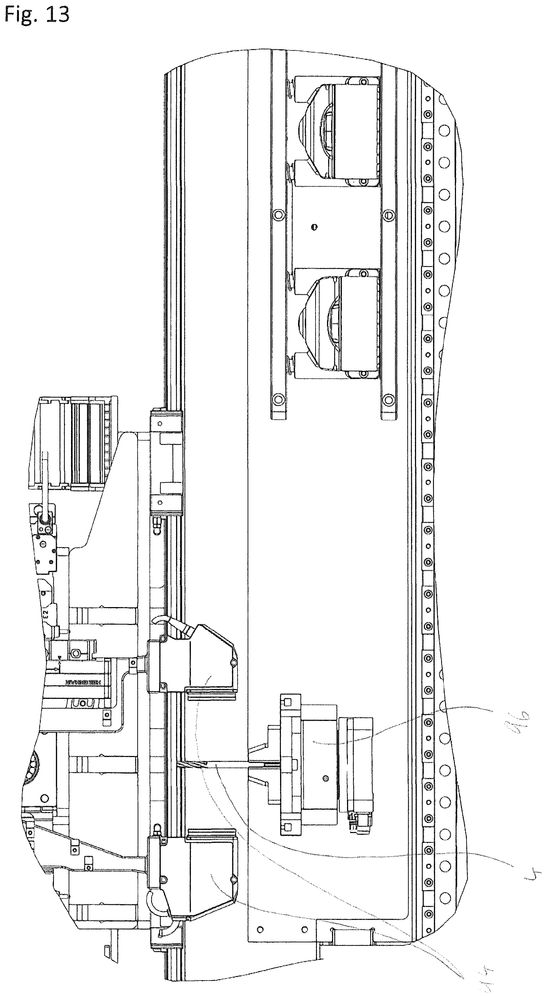

Während der Überprüfung wird nun das Messsystem 94 entlang der Z-Achse vertikal nach unten verfahren (siehe FIG 13 - zweite (mittlere) Messposition), sodass der Messbereich des Messsystems 94 das Werkzeug 4 von oben nach unten überstreicht - und so das Werkzeug 4 in Gänze vermessen (abgescannt) wird - und anschließend validiert werden kann.

Hierzu ist, wie auch die FIGen 12 und 13 zeigen, das Werkzeug 4 in ein drehbares Backenfutter 96 gespannt - und das Messsystem 94 prüft - nach FIG 12 - dabei den obersten Punkt des Werkzeuges 4 - und danach - nach FIG 13 - den Bereich, wo ein Greifer das Werkzeug 4 zum Einschrumpfen übernimmt. Das Backenfutter 96 ist in einer vorteilhaften Ausführung so gestaltet, dass auch der in das Backenfutter 96 eingespannte Teil des Werkzeuges 4 noch durch das Messsystem 94 erfasst und geprüft bzw. vermessen werden kann.

Dabei wird durch Drehen des Backenfutters 94 das Werkzeug 4 vollumfänglich geprüft und validiert.

Somit kann u.A. gemessen bzw. geprüft werden:
- Werkzeuglänge,
- Werkzeugdurchmesser,
- Werkzeugschaftdurchmesser,
- Zylindrizität des Werkzeugschafts (h6 Toleranz)
- Vorhandensein von Spannflächen am Werkzeugschaft (z. B. Weldon-Spannfläche)
- Zustand der Schneiden
- Sauberkeit , (anhaftende) Verschmutzung, z. B. Späne
- Beschichtungen (Farbe) und/oder Oberflächenzustände
- Zustände von ggfl. mehrteiligen Werkzeugen, z.B. korrekter Sitz von Wendeplatten- Schneid-/Greifbereich
- Halsfreischliff
- Kollisionen (Kollisionsprüfung, z.B. Greifer)
- Greifbereich i.O.

### (3) Überprüfung und (simultane) Korrektur beim Einschrumpfen sowie beim Ausschrumpfen des Werkzeugs 4 (FIG 14)

FIG 14 zeigt einen Ausschnitt der Schrumpfvorrichtung 2 bei einer Überprüfung und (simultane) Korrektur beim Ein- bzw. Ausschrumpfen des Werkzeugs 4 (in einer Messposition).

Hierbei befindet sich, nach FIG 14, die Messvorrichtung 94 derart - oberhalb - positioniert zum Werkzeug 4, dass zumindest der höchste Punkt des Werkzeugs 4 in den Messbereich des Messsystems 94 hineinragt - und so "live" vermessen werden kann.

Mittels dieses Messsystems 94 wird so während des Einschrumpfens und Ausschrumpfens der Prozess überwacht
- Beim Einschrumpfen wird simultan die Länge des Gesamtwerkzeugs korrigiert, da der höchste Punkt "live" mit der Steuerung der Schrumpfvorrichtung 2 korrigiert werden kann.
- Beim Ausschrumpfen wird überwacht, ob das Werkzeug 4 sich aus dem Werkzeughalter 6 ausschrumpfen lässt, - und kann dabei verhindert werden, dass der Greifer in Kollisionsbereiche rutscht, falls es beim Ausschrumpfen zu Problemen kommt. Dazu wird verglichen, ob die Auszugbewegung des Greifers mit der tatsächlichen Bewegung des Werkzeuges übereinstimmt.

### - Induktionsspulenanordnung 38 mit wechselbarer Anschlagscheibe 92 (FIGen 15 bis 19)

FIGen 15 bis 19 zeigen - verschiedene Ansichten - von einer der bei der Schrumpfzelle 2 vorhandenen Induktionsspulenanordnung 38.

Wie bereits erwähnt, können mit dem Schrumpfgerät 2 eine Gesamtpalette von Werkzeugen 4 und Werkzeughalter 8 geschrumpft werden, welche sich jeweils in ihren geometrischen Abmessungen, wie beispielsweise Werkzeug- und Werkzeughalterdurchmesser, unterscheiden.

Um diese Variabilität bzw. Flexibilität zu ermöglichen, sind in dem Schrumpfgerät 2 mehrere, in diesem Fall fünf, Induktionsspulenanordnungen 38 verbaut, welche sich u. A. jeweils in ihren Wickelkörper 104, insbesondere Wickelkörperhöhen und - durchmesser, unterscheiden, um dadurch (geometrisch) unterschiedliche Werkzeughalter 8, die sich insbesondere in der Länge des zu erwärmenden Bereiches unterscheiden, schrumpfen zu können.

Weiterhin wird diese Variabilität bzw. Flexibilität dadurch ermöglicht, dass die verschiedenen Induktionsspulenanordnungen 38 jeweils eine wechsel- bzw. austauschbare Anschlagscheibe 92 aufweisen, deren Ausgestaltung an verschiedene Werkzeuge 4 bzw. deren Werkzeugdurchmesser angepasst sind.

Sind die Induktionsspulenanordnungen 38 sowie die Anschlagscheiben 92 jeweils mittels eines lesbaren Code entsprechend ihrer Bestimmung fürs Schrumpfen (s. oben zur Variabilität bzw. Flexibilität) codiert, kann zum Schrumpfen eines bestimmten Werkzeugs 4 bzw. Werkzeughalters 8 die richtige Kombination aus Induktionsspulenanordnung 38 sowie Anschlagscheib 92 (für dieses bestimmte Werkzeug 4 bzw. bestimmten Werkzeughalter 8) ausgewählt und "zusammengestellt" - und so im Prozess verwendet werden.

FIGen 15 bis 19 zeigen - in verschiedenen Ansichten - (beispielshaft) eine solche Induktionsspulenanordnung 38 - mit wechselbarer Anschlagscheibe 92.

Wie die FIGen 15 bis 19 zeigen, sieht die Induktionsspulenanordnung 38 ein Spulengehäuse 102 vor, in dessen Inneren der ringförmig gewickelte Wickelkörper 104 aufgenommen ist.

An seinem hinterseitigen Ende sind bei dem Spulengehäuse 102 verschiedene Stecker/-verbindungen und Anschlusselemente 110 angebracht, welche - ist das Spulengehäuse über die linke und rechte Verschraubung 122, 124 an seinem Träger 126 (vgl. FIG 4) verschraubt - mit dortigen komplementären Steckverbindungen/Anschlusselementen 110 in Steckverbindung stehen, womit die Elektrik/Elektronik der Induktionsspulenanordnung 38 mit Leistung versorgbar ist.

Weiter wichtiger Bestandteil der Induktionsspulenanordnung 38 ist die an ihrer Oberseite, in dortige, eine Führung bildende Nut 132 einschiebbare, erwähnte Anschlagscheibe 92. Rastelemente (nicht gezeigt) in der Nut 132 lassen die vollständig eingeschobene Anschlagscheibe 92 einrasten.

Die Anschlagscheibe 92 besteht aus einem scheibenförmigen Scheibenelement bzw. Ferritkörper 118, welcher in einer Einfassung 120 aus Aluminium aufgenommen ist.

In der Mitte der Ferritscheibe 118 befindet sich eine kreisförmige Durchgangsöffnung 112, deren Durchmesser an in Werkzeughalter 8 einzuschrumpfende Werkzeuge 4 bzw. wiederum deren Durchmesser angepasst ist (- und so für alle Ferritscheiben unterschiedlich ist - s. oben). Gegenüberliegend an der kreisförmigen Durchgangsöffnung 112 der Ferritscheibe 118 sind ferner Freimachungen 114 vorgesehen, welche es dem Zangengreifer 22 ermöglichen, das von ihm gegriffene und einzuschrumpfende Werkzeug 4 durch die Durchgangsöffnung 112 in den Werkzeughalter 8 einzuführen bzw. (beim Ausschrumpfen) das jeweilige auszuschrumpfende Werkzeug entsprechend zu greifen und es aus dem Werkzeughalter 8 herauszuziehen.

Am vorderen Rand der Einfassung 120 der Anschlagscheibe 92 ist ein Greifelement 116 angeordnet, welches dazu dient, dass die Anschlagscheibe 92 - beim Wechsel - durch einen von den Zangengreifer 22 gegriffen werden kann. D.h., mindestens einer der mehreren Greifervorrichtungen 22/Zangengreifer 22 des Greiferkopfes 18 ist vorbestimmt, um dieses greifen bzw. den Anschlagscheibenwechsel durchzuführen

An der Oberseite der Induktionsspulenanordnung 38 befindet sich die erwähnte, nahezu halbkreisförmige, nach vorne offene Nut 132, in welche die Anschlagscheibe 92 - von vorne nach hinten - eingeschoben werden kann. Die an sich nahezu runde Anschlagscheibe 92 bzw. deren Einfassung 120 ist an beiden Seiten abgeflacht; entsprechend läuft die Nut 132 an ihren beiderseitigen vorderen Enden gerade aus, wodurch so die Anschlagscheibe 92 nur definiert eingeschoben werden kann bzw. sich beim Einschieben entsprechend in ihre richtige Position ausrichtet.

Mittels zweier mechanischer Kontaktschalter 106, 108 - einer vorne, einer hinten am Auflagerand der Anschlagscheibe 92 bzw. deren Einfassung 120 auf dem Spulengehäuse 102 wird der Einschub der Anschlagscheibe 92 bzw. deren Position überwacht. Es wird insbesondere durch diese Kontaktschalter 106, 108 erkannt, ob die Anschlagscheibe richtig bzw. vollständig positioniert bzw. eingeschoben ist.

Die Kühlung des Wickelkörpers 104 im Spulengehäuse 102 erfolgt durch Druckluftkühlung dahingehend, dass Druckluft im Bereich der Anschluss-/Steckelemente 110 über den Träger 126 ins Spulengehäuse geblasen wird.

Zur Kühlung des in der Induktionsspulenanordnung 38 bzw. in dem Wickelkörper 104 aufgenommenen Werkzeugs 4 bzw. Werkzeughalters 8 (nach dem Schrumpfen) ist ein Ringkanal 136 im Wickelkörper 104 vorgesehen, welcher über - in diesem Fall sechs - gleichmäßig verteilte Öffnung 138 nach innen mit der das Werkzeug 4 und den Werkzeughalter 8 aufnehmenden Öffnung verbunden ist. Von außen wird der Ringkanal 136 über eine Druckleitung (nicht dargestellt) und einen in den Ringkanal 136 mündenden Anschluss 140 mit Druckluft/Kühlluft versorgt. Über diesen 136 und den Öffnungen 138 kann dann die Druckluft an das Werkzeug 4/Werkzeughalter 8 geblasen werden.

Andere Kühlmedien (als Druckluft) sind entsprechend bei der Induktionsspulenanordnung 38 verwendbar.

Beim Schrumpfen entstehende Dämpfe und/oder Gase werden über eine Rauchabsaugung 134 bei der Induktionsspulenanordnung 38 abgesaugt. Hierzu sieht, wie die FIGen 18 und 19 zeigen, das Spulengehäuse 102 in ihren oberen Bereich einen (oberen) Rauchabsaugungskanal 128 bzw. in ihren unteren Bereich einen (unteren) Rauchabsaugungskanal 130 vor, über welche nach oben entweichende Dämpfe/Gase bzw. nach unten entweichende Dämpfe/Gase abgesaugt werden können.

Zu wechselnde Anschlagscheiben 92 sind in einem Wechsellager (nicht dargestellt) bei der Schrumpfzelle 2 vorgehalten.

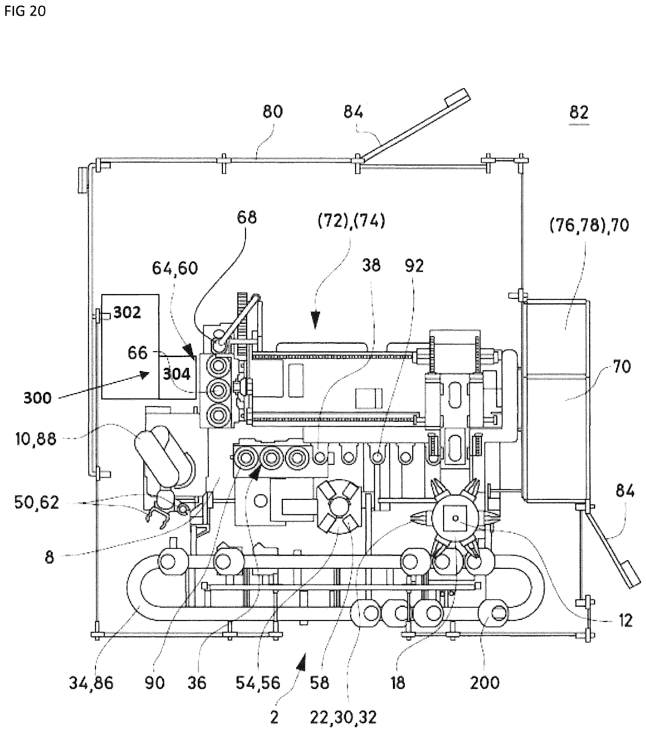

### - Automatisierte Schrumpfzelle 2 bzw. Schrumpfvorrichtung 2 zum automatisierten Ein- und Ausschrumpfen eines Werkzeugs in einen Werkzeughalter mit einer Ultraschallreinigungsanlage 300 (FIG 20)

FIG 20 zeigt die - im Obigen beschriebene - automatisierte Schrumpfzelle 2. Aufbau und Funktion/Prozess wurden im Obigen beschrieben - es wird auf Obiges verwiesen.

Darüber hinaus sieht diese Schrumpfzelle 2 nach FIG 20 eine Ultraschallreinigung - realisiert durch eine Ultraschallreinigungsanlage 300 - aufweisend in Ultraschallbecken 302 sowie eine Trocknungsanlage 304 - hier für die Säuberung (und Trocknung) von Werkzeugen 4 vor dem Einschrumpfen - vor.

Entsprechende Ultraschallreinigung mag entsprechend auch für die Reinigung von Werkzeughalter/Werkzeug vor dem Ausschrumpfen verwendet werden.

Für den automatisierten Prozess in der Schrumpfzelle 2 sowie insbesondere dortiger automatisierter Vermessung der Werkzeuge 4 bzw. Werkzeughalter 8 (s. oben, vgl. insbesondere Ausführungen zum Messsystem 94 bzw. (2) Überprüfung und Validierung eines Werkzeugs 4, welches eingeschrumpft werden soll (FIGen 12 und 13)) ist es unerlässlich, dass die Komponenten, insbesondere das Werkzeug 4, - für die Vermessung - sauber, d.h., frei von Schutz, Öl, Staub u. Ä., sind. Würden bzw. werden verschmutzte Komponenten vermessen, sind die Messergebnisse verfälscht, was zu Qualitätsminderung dann im Rahmen des Bearbeitungsprozesses bei der Herstellung führt. Für die Qualitätssicherung sind saubere Komponenten bzw. insbesondere saubere Werkzeuge 4 unerlässlich. Auch Greifbereiche an den Werkzeugen 4 bzw. Werkzeughalter 8 müssen frei von Verschmutzungen sein.

Wie FIG 20 erkennen lässt, sieht die Ultraschallreinigungsanlage 300 ein Ultraschallbecken 302 - etwa mit den Maßen 1m x 0,6m x 1,2m (Länge/Breite/Höhe) - gefüllt mit Wasser und einer Reinigungsflüssigkeit vor.

Um die Reinigungsflüssigkeit sauber zu halten, ist bei dem Ultraschallbecken 302 überdies ein Ölabscheider mit Überlauffunktion vorgesehen. Sedimentpartikel werden durch regelmäßige Reinigung des Ultraschallbeckens 302 vom Boden des Ultraschallbecken 302 bzw. aus dem Ultraschallbecken 302 entfernt.

Auch ist bei dem Ultraschallbecken 302 ein Wasseranschluss (, über welchem Wasser in das Ultraschallbecken 302 nachgefüllt werden kann), eine Füllstandsanzeige/-messung sowie eine Temperaturmessung/-steuerung mit Temperatursensor im Ultraschallbecken 302 vorgesehen. Weitere Prüf- und Analysegeräte zur Prüfung des Zustandes der Reinigungsflüssigkeit, wie Refraktometer oder zur Bestimmung des pH-Wertes können vorteilhaft sein. Die Prüf- und Analysegeräte können manuell oder automatisiert betrieben werden.

Unmittelbar neben dem Ultraschallbecken 302 ist eine Trocknungsanlage 304 - für die Trocknung der gereinigten Werkzeuge 4 - vorgesehen.

Diese Trocknungsanlage 304 kombiniert eine Nasssauganlage mit einer Drucklufttrocknung, welche einerseits Flüssigkeit/Feuchtigkeit vom Werkzeug 4 absaugen sowie andererseits diese abblasen. Beides in Kombination gewährleistet die vollständige Trocknung der gereinigten Werkzeuge 4.

Soll nun ein Werkzeug 4 - vor dem Einschrumpfen - gereinigt werden (hier rein zeitgesteuerter Reinigungsprozess mit vorgegebenen Reinigungszeiten im Ultraschallbecken 302 sowie vorgegebenen Trocknungszeiten in der Trocknungsanlage 304), so greift der Mehrachsen-Gelenkarmroboter 10 (mit seinem Gelenk-/Greiferarm 88) das Werkzeug 4 (aus der Förderbox 200 - vgl. Prozessschritt g)) und tauscht dieses - quer haltend - in das Ultraschallbecken 302 ein.

Durch Ultraschallreinigung wird das Werkzeug 4 im Ultraschallbecken 302 gereinigt, währenddessen dieses weiter vom Mehrachsen-Gelenkarmroboter 10 gehalten wird. Anschließend hebt der Mehrachsen-Gelenkarmroboter 10 das (nun gereinigte, aber nasse) Werkzeug 4 aus dem Ultraschallbecken 302 an - und verfährt dieses in die Trocknungsanlage, wo es - weiter gehalten von dem Mehrachsen-Gelenkarmroboter 10 - mittels der Kombination aus Nasssauganlage mit einer Drucklufttrocknung getrocknet wird. In analoger Weise können auch das Schrumpffutter oder andere Einzelteile eines Spannfutters, wie z. B. Spannzange und Spannmutter, gereinigt werden.

Danach "übergibt" der Mehrachsen-Gelenkarmroboter 10 das (gereinigte und getrocknete) Werkzeug 4 weiter an eine Übergabeeinheit, wo es durch diese, in diesem Fall das Drei-BackenFutter 96 (vgl. FIGen 12 und 13), (derart) gegriffen und gehalten wird, dass Funktionsbereiche und Greifbereiche (sowie auch dessen Gesamtlänge u.A.) am Werkzeug 4 sichtbar und überprüf- bzw. vermessbar sind (vgl. obig: (2) Überprüfung und Validierung eines Werkzeugs 4, welches eingeschrumpft werden soll (FIGen 12 und 13), Messsystem 94,).

Dort kann dann das Werkzeug 4 - unter Verwendung des Messsystems 94 - vermessen werden (s. obig a.a.O.) - und dessen Messdaten mit - für dieses Werkzeug gespeicherten und aus einer Datenbank abgerufenen - Daten verglichen werden.

Weiter kann von dort das Werkzeug 4 mittels des Greiferturms 12 bzw. dortiger Greifervorrichtung 22 (Zangengreifer 22) weiter verlagert werden (vgl. Prozessschritt i) - s. oben). Die Zentrierstation 56 (vgl. Prozessschritte g), h) und i)) kann entfallen.

### - Förderbox bzw. Transportbox 200 zum Transport von Werkzeughalter 6 und Werkzeugen 4 (FIGen 6 bis 9)

FIGen 6 bis 9 zeigen - in verschiedenen Ansichten - eine Förderbox bzw. Transportbox 200 zum Transport von Werkzeughalter 6 und Werkzeugen 4 (kurz in Folgenden nur Förderbox 200), wie sie beispielsweise bei der **automatisierten Schrumpfzelle 2** - zu dortigem Transport von Werkzeughalter 6 und Werkzeugen 4 (insbesondere zum bzw. weg von dortigem Schrumpfgerät 8, insbesondere auf dortigem Förderband 34) - eingesetzt werden kann (s. oben).

Die Förderbox 200 - hier darstellt in den FIGen 6 bis 9 mit einem aufgenommenen (Rotations-)Werkzeug 4, hier beispielsweise einem Fräser 4, und einem aufgenommenen Werkzeughalter 6, hier beispielsweise einem Schrumpffutter 6, - sieht einen im Wesentlichen quaderförmigen Grundkörper 202 vor.

An einer Oberseite 204 des Grundkörpers 202 sind, wie insbesondere die FIGen 8 und 9 zeigen, eine Vielzahl sich in ein Inneres 206 des Grundkörpers 202 erstreckende, zylindrische (d.h., im Durchmesser im Wesentlichen kreisförmige) Aufnahmeöffnungen 208, 210, 212, 214, 216, 218 für Werkzeughalter 6 und Werkzeugen 4 angeordnet.

Die - mehreren - Aufnahmeöffnungen 210, 216 für die Werkzeuge 4 sind dabei, wie sich ebenfalls insbesondere den FIGen 8 und 9 entnehmen lässt, blockweise 222 in einer linken Hälfte des Grundkörpers 202 angeordnet; im Bereich der rechten Hälfte des Grundkörpers 202 sind blockweise 222 die Aufnahmeöffnungen 212, 218 für die Werkzeughalter 212 vorgesehen.

Wie insbesondere die FIGen 8 und 9 zeigen, weist jede Aufnahmeöffnung 208, 210, 212 eine ihr zugehörige identische (identisch ausgebildete) Aufnahmeöffnung 214, 216, 218 auf, welche jeweils zwei so zusammengehörige Aufnahmeöffnungen 208, 210, 212 und 214, 216, 218 (spiegelbildlich zueinander in dem Grundkörper 202 der Förderbox 200 angeordnet sind.

So sind, wie insbesondere die FIGen 8 und 9 zeigen, die Aufnahmeöffnungen 210, 214 für die Werkzeuge 4 in zwei sich spiegelbildlich bzw. symmetrisch einer Symmetrieachse 226 gegenüberliegenden Längsreihen angeordnet.

Entsprechendes gilt so auch für die Aufnahmeöffnungen 212, 218 der Werkzeughalter 6, wobei es in diesem Fall, wie die FIGen 8 und 9 zeigen, "nur" zwei Aufnahmeöffnungen 212, 218, nämlich die erste Aufnahmeöffnung 212 und ihr zugehöriges - spiegelbildliches bzw. symmetrisch angeordnetes - "Spiegelbild" 218, sind.

Die Aufnahmeöffnungen 210, 216 für die Werkzeuge 4 weisen unterschiedliche Durchmesser 26 (und Tiefen 28) auf, welche an Werkzeugdurchmesser 26 (und Werkzeuglängen 28) angepasst sind, so dass in der Förderbox 200 eine Vielzahl von Werkzeugen 4 unterschiedlicher Größe aufgenommenen werden können.

Wie weiter auch insbesondere die FIGen 8 und 9 zeigen, sind die zwei zusammengehörigen Aufnahmeöffnungen 212, 218 für einen Werkzeughalter 6, d.h., die erste Aufnahmeöffnung 212 und ihr zugehöriges - spiegelbildliches bzw. symmetrisch angeordnetes - "Spiegelbild" 218, überschneidend 220 angeordnet sind.

Dieses ist platzsparend, ermöglicht aber doch, bei entsprechender "kleinen" Überschneidung 220, einen sicheren Halt/eine sicher haltende Aufnahme eines Werkzeughalters 6 in der Förderbox 220.

Um die Aufnahmeöffnungen 208, 210, 212, 214, 216, 218, nämlich einerseits ersten Aufnahmeöffnungen 208, 210, 212 und andererseits deren zugehörige identische spiegelbildlichen Aufnahmeöffnungen 214, 216, 218, unterscheiden zu können, ist an der Förderbox 200 bzw. bei dortigen Aufnahmeöffnungen 208, 210, 212, 214, 216, 218 eine diesbezügliche Markierung 224 vorgesehen -, welche die ersten Aufnahmeöffnungen 208, 210, 212 als "Gutseite" und deren zugehörige identische spiegelbildlichen Aufnahmeöffnungen 214, 216, 218 als "Schlechtseite" klassifiziert.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können hieraus abgeleitet werden, ohne den Schutzumfang der Erfindung zu verlassen. Induktionsspulenanordnung, Ultraschallbad und Förderbox können bei Bedarf auch als einzelne, separate erfinderische Gegenstände im Form von Teilanmeldungen weitergeführt werden.

### Bezugszeichenliste:

- 2: Schrumpfvorrichtung, (automatisierte) Schrumpfzelle
- 4: Werkzeug, Drehwerkzeug, Rotationswerkzeug, Fräser, Bohrer
- 6: Werkzeughalter, Schrumpfaufnahme/-futter
- 8: Schrumpfgerät
- 10: erste mehrachsige Handhabungsvorrichtung, Mehrachsen-Gelenkarmroboter

- 12: zweite automatisch verfahrbare Handhabungsvorrichtung, Greiferturm
- 14: einachsiger linearer Antrieb
- 16: Z-Achse
- 18: Greiferkopf
- 20: Winkelmessvorrichtung

- 22: Greifervorrichtung, Zangengreifer
- 24: Kraftmesseinrichtung, -dose
- 26: (Werkzeug-)Durchmesser, Durchmesser
- 28: (Werkzeug-)Länge, Tiefe
- 30: (bewegbare, elektromotorisch verfahrbare) Greiferbacke

- 32: Anschlagnase
- 34: Fördereinrichtung, Förderband
- 36: Spindel (des Schrumpfgeräts 8)
- 38: Induktionsspulenanordnung
- 40: horizontal

- 42: vertikal
- 44: Hebewegüberwachungseinrichtung
- 46: vertikaler Verfahrweg, Anhebeweg
- 48: Kollisionsüberwachungsvorrichtung
- 50: Leseeinrichtung/-vorrichtung, Messlaser

- 52: Markierung, Werkzeughaltercode
- 54: Zentrierstation
- 56: Zentrierbacke
- 58: Ausrichtungskontrolleinrichtung, laserbasiertes Messsystem
- 60: Messeinrichtung, Messlaser (Werkzeugvermessung)

- 62: Doppelgreifer (für Werkzeug und Werkzeughalter)
- 64: Kühlstation
- 66: Spindel (der Kühlstation 64)
- 68: Kühlaufsatz (überstülpbar, Erzeugung einer Wirbelstromkühlung (Zyklonkühlung))
- 70: Schaltschrank

- 72: Wuchtvorrichtung
- 74: Voreinstelleinrichtung
- 76: Steuerrechner
- 78: Steuerprogram, Steuerung (auf Steuerrechner 76)
- 80: Sicherheitsabschirmung, Zaun

- 82: Umgebung
- 84: (Sicherheits-)Tür (in 80)
- 86: Segment (von 34)
- 88: Gelenk-/Greiferarm
- 90: Stelltisch

- 92: Anschlagscheibe, Ferritscheibe, Konzentrator
- 94: (weitere) Messeinrichtung, Durchlichtmesssystem
- 96: (weitere) Haltevorrichtung, drehbares Backenfutter, 3-Backen-Futter

- 102: Spulengehäuse
- 104: Wickelkörper
- 106: (mechanischer) Kontaktschalter (vorne)
- 108: (mechanischer) Kontaktschalter (hinten)
- 110: Anschluss-/Steckelemente

- 112: Öffnung (für Werkzeug 8)
- 114: Freimachung (für Greifervorrichtung/Zangengreifer 22)
- 116: Greifelement (an der Anschlagscheibe 92 zum Greifen der Anschlagscheibe 92 durch die Greifervorrichtung/den Zangengreifer 22)
- 118: Scheibenelement (aus Ferrit), Ferritscheibe/-körper
- 120: Einfassung (des Scheibenelements 118)

- 122: (linke) Verschraubung (für die Befestigung der Induktionsspulenanordnung 38 am Träger 126)
- 124: (rechte) Verschraubung (für die Befestigung der Induktionsspulenanordnung 38 am Träger 126)
- 126: Träger (für Induktionsspulenanordnung 38)(vgl. FIG 4)
- 128: (oberer) Rauchabsaugungskanal
- 130: (unterer) Rauchabsaugungskanal

- 132: Nut
- 134: Rauchabsaugung
- 136: Ringkanal
- 138: Öffnungen im Ringkanal 136
- 140: Anschluss (für Druckluftleitung für Werkzeug-/halterkühlung)

- 200: Förder-/Transportbox, Förder-/Transportbehälter
- 202: Grundkörper
- 204: Oberseite (von 202)
- 206: Inneres (von 202)
- 208: Aufnahmeöffnung
- 210: Aufnahmeöffnung für ein Werkzeug

- 212: Aufnahmeöffnung für einen Werkzeughalter
- 214: spiegelbildliche, identische Aufnahmeöffnung
- 216: spiegelbildliche, identische Aufnahmeöffnung für ein Werkzeug
- 218: spiegelbildliche, identische Aufnahmeöffnung für einen Werkzeughalter
- 220: Überschneidung (bei zwei zusammengehörigen Aufnahmeöffnungen für einen Werkzeughalter)
- 222: blockweise Anordnung
- 224: Markierung, Gut-Schlecht-Markierung
- 226: Symmetrieachse

- 300: Ultraschallreinigungsanlage
- 302: (Ultraschallreinigungs-)Becken
- 304: Trocknungsanlage

## Patentansprüche

1. **Schrumpfvorrichtung** zum automatisierten Ein- und Ausschrumpfen eines Werkzeugs in einen Werkzeughalter mit einem Schrumpfgerät zu einem Ein- und/oder Ausschrumpfen eines Werkzeuges in einen Werkzeughalter und einer ersten mehrachsigen Handhabungsvorrichtung zum Versetzen von Werkzeughalter und Werkzeugen in der Schrumpfvorrichtung,
**gekennzeichnet, durch**
eine zweite, automatisch verfahrbare Handhabungsvorrichtung, mittels welcher unter Verwendung eines einachsigen linearen Antriebs das Werkzeug beim Ein- bzw. Ausschrumpfen entlang dieser einen Achse (Z-Achse) relativ zu dem Werkzeughalter automatisch verfahrbar ist.

2. **Schrumpfvorrichtung** zum automatisierten Ein- und Ausschrumpfen eines Werkzeugs in einen Werkzeughalter nach einem der voranstehenden Ansprüche,
**dadurch gekennzeichnet, dass**
die zweite, automatisch verfahrbare Handhabungsvorrichtung einen um die eine Achse (Z-Achse) drehbaren Greiferkopf aufweist, insbesondere mit einer Winkelmessvorrichtung, unter Verwendung derer eine Drehposition des Greiferkopfes messbar ist.

3. **Schrumpfvorrichtung** zum automatisierten Ein- und Ausschrumpfen eines Werkzeugs in einen Werkzeughalter nach einem der voranstehenden Ansprüche,
**dadurch gekennzeichnet, dass**
der Greiferkopf mehrere Greifervorrichtungen zum Greifen von Werkzeugen aufweist, insbesondere, dass die mehreren Greifervorrichtungen gemäß einer vorgebbaren Teilung, im Speziellen gleichverteilt, um die eine Achse (Z-Achse) angeordnet sind.

4. **Schrumpfvorrichtung** zum automatisierten Ein- und Ausschrumpfen eines Werkzeugs in einen Werkzeughalter nach einem der voranstehenden Ansprüche,
**dadurch gekennzeichnet, dass**
der Greiferkopf Kraftmesseinrichtungen aufweisen, unter Verwendung derer eine Zugkraft der Greifervorrichtung auf ein Werkzeug messbar ist.

5. **Schrumpfvorrichtung** zum automatisierten Ein- und Ausschrumpfen eines Werkzeugs in einen Werkzeughalter nach einem der voranstehenden Ansprüche,
**dadurch gekennzeichnet, dass**
die mehreren Greifervorrichtungen an Werkzeugen vorgebbaren Durchmesser angepasst sind.

6. **Schrumpfvorrichtung** zum automatisierten Ein- und Ausschrumpfen eines Werkzeugs in einen Werkzeughalter nach einem der voranstehenden Ansprüche,
**dadurch gekennzeichnet, dass**
eine bzw. jeder von den Greifervorrichtung zwei beim Greifvorgang relativ zueinander bewegbare, insbesondere elektromotorisch verfahrbare, Greiferbacken aufweist, welche insbesondere derart eingerichtet sind, dass ein Greifvorgang, insbesondere hinsichtlich einer Greifkraft, mess- und/oder überwachbar ist und/oder eine bzw. jede von den Greiferbacken eine Anschlagnase vorsieht.

7. **Schrumpfvorrichtung** zum automatisierten Ein- und Ausschrumpfen eines Werkzeugs in einen Werkzeughalter nach einem der voranstehenden Ansprüche,
**dadurch gekennzeichnet, dass**
eine Greiferbacke auswechselbar und/oder positionsgenau klemmbar bei der Greifvorrichtung angeordnet ist.

8. **Schrumpfvorrichtung** zum automatisierten Ein- und Ausschrumpfen eines Werkzeugs in einen Werkzeughalter nach einem der voranstehenden Ansprüche,
**gekennzeichnet, durch**
eine Fördereinrichtung zu einem Transport von Werkzeughalter und Werkzeugen zu dem Schrumpfgerät, insbesondere ein umlaufendes, insbesondere segmentiertes, Förderband.

9. **Schrumpfvorrichtung** zum automatisierten Ein- und Ausschrumpfen eines Werkzeugs in einen Werkzeughalter nach einem der voranstehenden Ansprüche,
**dadurch gekennzeichnet, dass**
das Schrumpfgerät mindestens eine, insbesondere mehrere, insbesondere nebeneinander angeordnete, Spindeln aufweist, unter Verwendung deren Werkzeughalter beim Schrumpfen gespannt gehalten werden können, und/oder dass das Schrumpfgerät mindestens eine, insbesondere mehrere, insbesondere nebeneinander angeordnete und/oder an Werkzeughalter angepasste, Induktionsspulenanordnungen aufweist, unter Verwendung derer Werkzeughalter erwärmt werden können.

10. **Schrumpfvorrichtung** zum automatisierten Ein- und Ausschrumpfen eines Werkzeugs in einen Werkzeughalter nach einem der voranstehenden Ansprüche,
**dadurch gekennzeichnet, dass**
die mindestens eine Spindel des Schrumpfgerätes horizontal und/oder vertikal verfahrbar ist, insbesondere mit einer Hebewegüberwachungseinrichtung, unter Verwendung derer ein vertikaler Verfahrweg beim vertikalen Verfahren (Anheben) einer Spindel überwachbar und/oder messbar ist.

11. **Schrumpfvorrichtung** zum automatisierten Ein- und Ausschrumpfen eines Werkzeugs in einen Werkzeughalter nach einem der voranstehenden Ansprüche,
**dadurch gekennzeichnet, dass**
das Schrumpfgerät eine Kollisionsüberwachungsvorrichtung aufweist, unter Verwendung derer eine Kollision zwischen einem Werkzeughalter und einer Induktionsspulenanordnung detektierbar ist.

12. **Schrumpfvorrichtung** zum automatisierten Ein- und Ausschrumpfen eines Werkzeugs in einen Werkzeughalter nach einem der voranstehenden Ansprüche,
**gekennzeichnet, durch**
eine Lesevorrichtung, welche insbesondere an der ersten mehrachsigen Handhabungsvorrichtung angeordnet ist und/oder welche derart eingerichtet ist, dass, wenn ein Werkzeughalter in einer der Spindel des Schrumpfgeräts gespannt gehalten wird, bei einem Drehen der Spindel eine an dem Werkzeughalter angebrachte Markierung, insbesondere ein Werkzeughaltercode, lesbar ist.

13. **Schrumpfvorrichtung** zum automatisierten Ein- und Ausschrumpfen eines Werkzeugs in einen Werkzeughalter nach einem der voranstehenden Ansprüche,
**gekennzeichnet, durch**
eine Zentrierstation zu einem Spannen und (Aus-)Richten eines Werkzeuges.

14. **Schrumpfvorrichtung** zum automatisierten Ein- und Ausschrumpfen eines Werkzeugs in einen Werkzeughalter nach einem der voranstehenden Ansprüche,
**gekennzeichnet, durch**
eine, insbesondere im Bereich der Zentrierstation angeordnete, Ausrichtungskontrolleinrichtung, unter Verwendung deren eine Ausrichtung eines, insbesondere aus der Zentrierstation mittels der zweiten, automatisch verfahrbaren Handhabungsvorrichtung entnommenen, Werkzeugs bestimmbar und/oder überwachbar ist.

15. **Schrumpfvorrichtung** zum automatisierten Ein- und Ausschrumpfen eines Werkzeugs in einen Werkzeughalter nach einem der voranstehenden Ansprüche,
**gekennzeichnet, durch**
eine Messeinrichtung, insbesondere einen Laser, zu einem Vermessen eines Werkzeugs.

16. **Schrumpfvorrichtung** zum automatisierten Ein- und Ausschrumpfen eines Werkzeugs in einen Werkzeughalter nach einem der voranstehenden Ansprüche,
**gekennzeichnet, durch**
eine weitere Messeinrichtung, insbesondere zu einem Vermessen eines Werkzeugs und/oder Werkzeughalters (mit oder ohne Werkzeug) .

17. **Schrumpfvorrichtung** zum automatisierten Ein- und Ausschrumpfen eines Werkzeugs in einen Werkzeughalter nach dem voranstehenden Anspruch,
**dadurch gekennzeichnet, dass**
die weitere Messeinrichtung ein optisches Durchlicht- bzw. Auflichtmesssystem ist.

18. **Schrumpfvorrichtung** zum automatisierten Ein- und Ausschrumpfen eines Werkzeugs in einen Werkzeughalter nach einem der beiden voranstehenden Ansprüche,
**dadurch gekennzeichnet, dass**
die weitere Messeinrichtung zumindest in zwei Raumrichtungen verfahrbar ist, insbesondere im Wesentlichen längs der einen Achse (Z-Achse) und/oder im Wesentlichen quer zu der einen Achse (Z-Achse) verfahrbar ist.

19. **Schrumpfvorrichtung** zum automatisierten Ein- und Ausschrumpfen eines Werkzeugs in einen Werkzeughalter nach einem der voranstehenden Ansprüche,
**gekennzeichnet, durch**
eine weitere Haltevorrichtung, unter Verwendung deren ein Werkzeug, insbesondere bei einem Überprüfen unter Verwendung der weiteren Messeinrichtung, gehalten, insbesondere gespannt gehalten, werden kann.

20. **Schrumpfvorrichtung** zum automatisierten Ein- und Ausschrumpfen eines Werkzeugs in einen Werkzeughalter nach dem voranstehenden Anspruch,
**dadurch gekennzeichnet, dass**
die weitere Haltevorrichtung drehbar ist und/oder ein, insbesondere drehbares, Backenfutter aufweist.

21. **Schrumpfvorrichtung** zum automatisierten Ein- und Ausschrumpfen eines Werkzeugs in einen Werkzeughalter nach einem der beiden voranstehenden Ansprüche,
**dadurch gekennzeichnet, dass**
die weitere Haltevorrichtung horizontal, insbesondere im Wesentlichen quer zu der einen Achse (Z-Achse), und/oder vertikal, insbesondere im Wesentlichen längs der einen Achse (Z-Achse), verfahrbar ist.

22. **Schrumpfvorrichtung** zum automatisierten Ein- und Ausschrumpfen eines Werkzeugs in einen Werkzeughalter nach einem der voranstehenden Ansprüche,
**dadurch gekennzeichnet, dass**
die erste mehrachsige Handhabungsvorrichtung ein Mehrachsen-Gelenkarmroboter ist, welcher insbesondere einen Doppelgreifer für ein Greifen eines Werkzeugs und für ein Greifen eines Werkzeughalters aufweist.

23. **Schrumpfvorrichtung** zum automatisierten Ein- und Ausschrumpfen eines Werkzeugs in einen Werkzeughalter nach einem der voranstehenden Ansprüche,
**gekennzeichnet, durch**
eine Kühlstation zur Kühlung, insbesondere durch das Schrumpfen erwärmter, Werkzeughalter, insbesondere mit mehreren, insbesondere nebeneinander angeordneten, Spindeln, unter Verwendung deren Werkzeughalter beim Kühlen gespannt gehalten werden können und/oder mit einem Kühlaufsatz, welcher über an den Spindeln gehaltener Werkzeughalter überstülpbar ist und welcher eingerichtet ist zur Erzeugung einer Wirbelstromkühlung (Zyklonkühlung).

24. **Schrumpfvorrichtung** zum automatisierten Ein- und Ausschrumpfen eines Werkzeugs in einen Werkzeughalter nach einem der voranstehenden Ansprüche,
**gekennzeichnet, durch**
eine Reinigungsvorrichtung, insbesondere eine Ultraschallreinigung, und/oder eine Induktionsspulenanordnung mit wechselbarer Anschlagscheibe, die gegebenenfalls automatisch, insbesondere nach einer Parameterwahl, gewechselt werden kann.

25. **Schrumpfvorrichtung** zum automatisierten Ein- und Ausschrumpfen eines Werkzeugs in einen Werkzeughalter nach einem der voranstehenden Ansprüche,
**gekennzeichnet, durch**
einen Schaltschrank und/oder eine Wuchtvorrichtung und/oder eine Voreinstellvorrichtung und/oder einen Steuerrechner, auf welchem insbesondere ein Steuerprogram für eine Steuerung der Schrumpfvorrichtung gespeichert ist.

26. **Schrumpfvorrichtung** zum automatisierten Ein- und Ausschrumpfen eines Werkzeugs in einen Werkzeughalter nach einem der voranstehenden Ansprüche,
**gekennzeichnet, durch**
eine Sicherheitsabschirmung, mittels welcher insbesondere weite Bereiche der Schrumpfvorrichtung gegenüber einer Umgebung um die Schrumpfvorrichtung abschirmbar sind.

27. **Verfahren** zum automatisierten Ein- und Ausschrumpfen eines Werkzeugs in einen Werkzeughalter, insbesondere unter Verwendung einer **Schrumpfvorrichtung** zum automatisierten Ein- und Ausschrumpfen eines Werkzeugs in einen Werkzeughalter nach einem der voranstehenden Ansprüche,
**bei dem**
unter Verwendung eines einachsigen linearen Antriebs einer zweiten, automatisch verfahrbaren Handhabungsvorrichtung das Werkzeug beim Ein- bzw. Ausschrumpfen entlang dieser einen Achse (Z-Achse) relativ zu dem Werkzeughalter automatisch verfahren wird.

28. **Verfahren** zum automatisierten Ein- und Ausschrumpfen eines Werkzeugs in einen Werkzeughalter nach einem der voranstehenden Verfahrensansprüche
**durch gekennzeichnet, dass**
zumindest einer, insbesondere mehrere oder alle, der folgenden Verfahrensschritte, insbesondere in gelisteter Reihenfolge, durchgeführt werden:
(a) Bestückung einer auf einer Fördereinrichtung angeordneten Förderbox mit einem (einzuschrumpfenden) Werkzeug und/oder einem Werkzeughalter und/oder mit einem Werkzeughalter mit einem (auszuschrumpfenden) Werkzeug oder Ablage einer mit einem (einzuschrumpfenden) Werkzeug und einem Werkzeughalter oder einem Werkzeughalter mit einem (auszuschrumpfenden) Werkzeug befüllten Förderbox auf einer Fördereinrichtung,
(b) Transport einer mit einem (einzuschrumpfenden) Werkzeug und einem Werkzeughalter oder einem Werkzeughalter mit einem (auszuschrumpfenden) Werkzeug bestückten Förderbox mittels einer Fördereinrichtung zu dem Schrumpfgerät, insbesondere in eine Nähe einer (Spann-)Spindel des Schrumpfgeräts,
(c) Versetzen eines Werkzeughalters von einer Förderbox auf eine Spindel des Schrumpfgeräts, insbesondere unter Verwendung einer ersten mehrachsigen Handhabungsvorrichtung zum Versetzen von Werkzeughalter und Werkzeugen,
(d) Spannen eines Werkzeughalters auf einer Spindel des Schrumpfgeräts,
(e) Rotieren eines auf einer Spindel des Schrumpfgerätes gespannten Werkzeughalters, insbesondere um die eine Achse (Z-achse) und insbesondere um 360°, und Lesen einer auf dem Werkzeughalter angebrachten Markierung, insbesondere eines auf dem Werkzeughalter angebrachten Werkzeughaltercodes,
(f) Bereitstellen von Werkzeughalter- und/oder Werkzeug- und/oder Schrumpfdaten bzw. -parameter unter Verwendung einer auf dem Werkzeughalter angebrachten und gelesenen Markierung, insbesondere eines auf dem Werkzeughalter angebrachten und gelesenen Werkzeughaltercodes,
(g) Versetzen eines (einzuschrumpfenden) Werkzeuges von einer Förderbox in eine Zentrierstation, insbesondere unter Verwendung einer ersten mehrachsigen Handhabungsvorrichtung zum Versetzen von Werkzeughalter und Werkzeugen,
(h) Spannen und/oder Ausrichten eines (einzuschrumpfenden) Werkzeugs in einer Zentrierstation,
(i) Greifen eines in einer Zentrierstation gespannten (einzuschrumpfenden) Werkzeugs mittels der zweiten, automatisch verfahrbaren Handhabungsvorrichtung, insbesondere derart, dass das (einzuschrumpfende) Werkzeug nach dem Einschrumpfen in einen Werkzeughalter eine vorgebbare Position in dem Werkzeughalter aufweist,
(j) Vermessen eines durch die zweite, automatisch verfahrbare Handhabungsvorrichtung gegriffenen (einzuschrumpfenden) Werkzeugs, insbesondere unter Verwendung eines Messlasers und/oder insbesondere Vermessen einer Ausrichtung des (einzuschrumpfenden) Werkzeugs, insbesondere hinsichtlich der einen Achse (Z-Achse) oder einer Geometrie (beispielsweise Länge),
(k) Verfahren eines auf einer Spindel des Schrumpfgerätes gespannten Werkzeughalters, insbesondere Verfahren des Werkzeughalters bis in Verlängerung der einen Achse (Z-Achse) unterhalb einer Induktionsspulenanordnung des Schrumpfgeräts,
(l) Ermitteln eines Anhebewegs eines auf einer Spindel des Schrumpfgerätes gespannten Werkzeughalters, insbesondere längs der einen Achse (Z-Achse) und insbesondere unter Verwendung einer Geometrie des Werkzeughalters,
(m) Anheben eines auf einer Spindel des Schrumpfgerätes gespannten Werkzeughalters, insbesondere längs der einen Achse (Z-Achse), insbesondere bis der Werkzeughalter in einer Induktionsspulenanordnung, insbesondere an Anschlagscheiben der Induktionsspulenanordnung, anschlägt,
(n) Überwachung eines Anhebevorgangs eines auf einer Spindel des Schrumpfgerätes gespannten Werkzeughalters hinsichtlich eines Anhebewegs und/oder einer Kollision mit einer Induktionsspulenanordnung, insbesondere einer Kollision mit Anschlagscheiben der Induktionsspulenanordnung,
(o) Erwärmen eines Werkzeughalters unter Verwendung einer Induktionsspulenanordnung des Schrumpfgeräts,
(p) Greifen eines in einem Werkzeughalter angeordneten (auszuschrumpfenden) Werkzeugs durch die zweite, automatisch verfahrbare Handhabungsvorrichtung und Verfahren des durch die zweite, automatisch verfahrbare Handhabungsvorrichtung gegriffenen (auszuschrumpfenden) Werkzeugs längs der einen Achse (Z-Achse) aus dem Werkzeughalter, insbesondere mit einer Überwachung des Verfahrens des gegriffenen Werkzeugs hinsichtlich einer Zugkraft auf das (auszuschrumpfende) Werkzeug,
(q) Schwenken eines Greiferkopfes der zweiten, automatisch verfahrbare Handhabungsvorrichtung;
(r) Verfahren (Einsetzen) eines durch die zweite, automatisch verfahrbare Handhabungsvorrichtung gegriffenen (einzuschrumpfenden) Werkzeugs entlang der einen Achse (Z-Achse) relativ zu dem Werkzeughalter in eine vorgebbare Schrumpfposition bezüglich des Werkzeughalters, insbesondere Verfahren des durch die zweite, automatisch verfahrbare Handhabungsvorrichtung gegriffenen (einzuschrumpfenden) Werkzeugs entlang der einen Achse (Z-Achse) relativ zu dem Werkzeughalter solange bis Greifernasen eines Greiferkopfes der zweiten, automatisch verfahrbaren Handhabungsvorrichtung auf eine obere Stirnseite des Werkzeughalters oder auf einer Anschlagscheibe der Induktionsspulenanordnung aufliegen,
(s) kurzzeitiges Halten eines (in einen Werkzeughalter einzuschrumpfenden) Werkzeugs mittels der zweiten, automatisch verfahrbaren Handhabungsvorrichtung, insbesondere zumindest solange bis durch Abkühlen des Werkzeughalters das (einzuschrumpfende) Werkzeug gespannt wird,
(t) Absenken eines auf einer Spindel des Schrumpfgerätes gespannten (, ein gerade neu eingeschrumpftes Werkzeug spannenden) Werkzeughalters, insbesondere längs der einen Achse (Z-Achse),
(u) Versetzen eines auf einer Spindel des Schrumpfgerätes gespannten (, ein gerade neu eingeschrumpftes Werkzeug spannenden) Werkzeughalters unter Verwendung einer ersten mehrachsigen Handhabungsvorrichtung in eine Kühlstation,
(v) Kühlen eines (ein gerade neu eingeschrumpftes Werkzeug spannenden) Werkzeughalters, insbesondere unter Verwendung einer Wirbelstromkühlung (Zyklonkühlung),
(w) Versetzen eines (ein gerade neu eingeschrumpftes Werkzeug spannenden) Werkzeughalters unter Verwendung einer ersten mehrachsigen Handhabungsvorrichtung in eine Wuchtvorrichtung und/oder in eine Voreinstelleinrichtung,
(x) Vermessen eines (ein gerade neu eingeschrumpftes Werkzeug spannenden) Werkzeughalters, insbesondere in einer Voreinstelleinrichtung oder in einer Kühlstation oder in einer Wuchtvorrichtung,
(y) Verfahren eines (gerade ausgeschrumpften) Werkzeugs mittels der zweiten, automatisch verfahrbaren Handhabungsvorrichtung, insbesondere zu einer Förderbox und/oder zu einer Zentrierstation;
(z) Versetzen eines (gekühlten) Werkzeughalters in eine Förderbox.

29. **Verfahren** zum automatisierten Ein- und Ausschrumpfen eines Werkzeugs in einen Werkzeughalter nach einem der voranstehenden Verfahrensansprüche
**dadurch gekennzeichnet, dass**
eine Überwachung bzw. Überprüfung des Werkzeugs und/oder des Werkzeughalters (mit oder ohne Werkzeug), insbesondere unter Verwendung des weiteren Messsystems und/oder der weiteren Haltevorrichtung, durchgeführt wird.

30. **Verfahren** zum automatisierten Ein- und Ausschrumpfen eines Werkzeugs in einen Werkzeughalter nach dem voranstehenden Verfahrensanspruch
**dadurch gekennzeichnet, dass**
die Werkzeugaufnahme, mit oder ohne Werkzeug, überwacht bzw. überprüft wird, insbesondere wobei das weitere Messsystem im Wesentlichen längs der einen Achse (Z-Achse) verfahren wird, und/oder eine Gesamtlänge, insbesondere von der Werkzeugaufnahme mit Werkzeug (insbesondere als "i.O." bzw. "in Toleranz"), ein Schneidendurchmesser, ein Werkzeugschaftdurchmesser (insbesondere in Genauigkeit einer h6 Schafttoleranz) und/oder ein Längen-A-Maß (insbesondere als "i.O") überwacht und/oder geprüft werden und/oder Kollisionsprüfungen durchgeführt werden.

31. **Verfahren** zum automatisierten Ein- und Ausschrumpfen eines Werkzeugs in einen Werkzeughalter nach dem Verfahrensanspruch 22
**dadurch gekennzeichnet, dass**
das Werkzeug überwacht bzw. überprüft wird, insbesondere wobei das Werkzeug in der weiteren Haltevorrichtung gehalten und/oder durch diese gedreht wird.

32. **Verfahren** zum automatisierten Ein- und Ausschrumpfen eines Werkzeugs in einen Werkzeughalter nach dem Verfahrensanspruch 22
**dadurch gekennzeichnet, dass**
das Werkzeug überwacht bzw. überprüft wird, insbesondere wobei das weitere Messsystem zumindest einen obersten Punkt des Werkzeuges, einen Greifbereich an dem Werkzeug, eine Werkzeuglänge und/oder einen Werkzeugdurchmesser bzw. Werkzeugschaftdurchmesser (insbesondere in Genauigkeit einer h6 Schafttoleranz) überprüft und/oder wobei das Werkzeug vollumfänglich geprüft und validiert wird und/oder Kollisionsprüfungen durchgeführt werden.

33. **Verfahren** zum automatisierten Ein- und Ausschrumpfen eines Werkzeugs in einen Werkzeughalter nach dem Verfahrensanspruch 22
**dadurch gekennzeichnet, dass**
die Werkzeugaufnahme beim Einschrumpfen und/oder beim Ausschrumpfen überwacht bzw. überprüft wird, insbesondere wobei beim Ausschrumpfen überwacht bzw. überprüft wird, ob sich das Werkzeug aus dem Werkzeughalter ausschrumpfen lässt.

34. **Verfahren** zum automatisierten Ein- und Ausschrumpfen eines Werkzeugs in einen Werkzeughalter nach dem voranstehenden Verfahrensanspruch
**dadurch gekennzeichnet, dass**
simultan zu der bzw. während der Überwachung bzw. Überprüfung, insbesondere unter Verwendung von aus der Überwachung bzw. Überprüfung erlangter Informationen, Korrekturen beim Einschrumpfen und/oder Ausschrumpfen vorgenommen werden.

35. **Verfahren** zum automatisierten Ein- und Ausschrumpfen eines Werkzeugs in einen Werkzeughalter nach dem voranstehenden Verfahrensanspruch
**dadurch gekennzeichnet, dass**
beim Einschrumpfen eine Länge des Werkzeugs korrigiert wird.

36. **Verfahren** zum automatisierten Ein- und Ausschrumpfen eines Werkzeugs in einen Werkzeughalter nach einem der voranstehenden Verfahrensansprüche
**dadurch gekennzeichnet, dass**
ein Zentrieren und/oder ein Ausrichten eines (einzuschrumpfenden) Werkzeugs durch ein Drehen eines Werkzeughalters bei einem Einsetzen des (einzuschrumpfenden) Werkzeugs in den Werkzeughalter erfolgt.

37. **Förderbox für Werkzeughalter und/oder Werkzeuge gekennzeichnet durch**
einen Grundkörper mit einer Oberseite und einer Vielzahl dortig angeordneter, sich in ein Inneres des Grundkörpers erstreckender Aufnahmeöffnungen für Werkzeughalter und Werkzeugen, wobei jede im Grundkörper angeordnete Aufnahmeöffnung für einen Werkzeughalter bzw. für ein Werkzeug eine spiegelbildlich am Grundkörper angeordnete, identische Aufnahmeöffnung aufweist.

38. **Förderbox** nach dem voranstehenden Anspruch,
**dadurch gekennzeichnet, dass**
die Aufnahmeöffnungen für die Werkzeuge an Werkzeugdurchmesser und/oder Werkzeuglängen angepasst sind.

39. **Förderbox** nach einem der beiden voranstehenden Ansprüche, **dadurch gekennzeichnet, dass**
die zwei zusammengehörigen Aufnahmeöffnungen für einen Werkzeughalter überschneidend angeordnet sind.

40. **Förderbox** nach einem der voranstehenden Ansprüche 37 bis 39,
**dadurch gekennzeichnet, dass**
die Aufnahmeöffnungen für die Werkzeuge einerseits und die Aufnahmeöffnungen für die Werkzeughalter andererseits blockweise und/oder voneinander abgesetzt im Grundkörper angeordnet sind.

41. **Förderbox** nach einem der voranstehenden Ansprüche 37 bis 40,
die Aufnahmeöffnungen für die Werkzeuge und Aufnahmeöffnungen für die Werkzeughalter einerseits und ihre spiegelbildlich angeordneten identischen Aufnahmeöffnungen andererseits eine sie unterscheidende Markierung aufweisen.

42. **Förderbox** nach einem der vorstehenden Ansprüche 37 bis 41, eingesetzt zu einem Transport von Werkzeughalter und/oder Werkzeugen bei einer Schrumpfvorrichtung nach einem der voranstehenden Ansprüche 1 bis 25.
